# EUROPEAN PATENT APPLICATION

(11) **EP 4 539 532 A1**
(43) Date of publication of application: **16.04.2025**
(21) Application number: 23839989.3
(22) Date of filing: 13.07.2023
(51) Int. Cl.: H04W 24/10, H04W 24/08, H04W 76/10, H04W 4/021

(54) **METHOD AND DEVICE FOR MEASURING QOE IN WIRELESS COMMUNICATION SYSTEM**

(30) Priority: 13.07.2022 KR 20220086441
(71) Applicant: Samsung Electronics Co., Ltd., Suwon-si, Gyeonggi-do 16677 (KR)
(72) Inventor: JEONG, Seungbeom, Suwon-si Gyeonggi-do 16677 (KR); BAEK, Sangkyu, Suwon-si Gyeonggi-do 16677 (KR)
(74) Representative: Gulde & Partner
(86) International application number: PCT/KR2023/010019
(87) International publication number: WO 2024/014898

(57) **Abstract**

The disclosure relates to a 5G or 6G communication system for supporting a higher data transmission rate. According to various embodiments of the present disclosure, a method performed by user equipment (UE) in a wireless communication system may comprise the steps of: receiving, from a first base station, configuration information for measuring radio access network (RAN) visible quality of experience (RVQoE); performing the RVQoE measurement in an inactive or idle mode; establishing a radio resource control (RRC) connection with a second base station; and transmitting, to the second base station, information about a result of the RVQoE measurement.

## Description

### [Technical Field]

The disclosure generally relates to a quality of experience (QoE) measurement in a wireless communication system and, specifically, relates to a device and a method for QoE measurement in an idle mode and an inactive mode in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

In a wireless communication system, a UE and a base station may transmit or receive a signal for efficient quality of experience (QoE) measurement.

### [Disclosure of Invention]

### [Technical Problem]

Upon the above-described discussion, the disclosure is to provide a device and a method enabling effective transmission or reception of a signal in a wireless communication system.

More specifically, the disclosure provides a device and a method for efficiently transmitting or receiving a signal between a base station and a UE through quality of experience (QoE) measurement in an idle mode and an inactive mode in a wireless communication system.

### [Technical Solution]

According to various embodiments of the disclosure, a user equipment (UE) in a wireless communication system may include a transceiver and a controller coupled with the transceiver, wherein the controller is configured to receive, from a first base station, configuration information for radio access network (RAN) visible quality of experience (RVQoE) measurement, perform the RVQoE measurement in an inactive or idle mode, establish a radio resource control (RRC) connection with a second base station, and transmit, to the second base station, information on a result of the RVQoE measurement.

According to various embodiments, a method performed by a user equipment (UE) in a wireless communication system may include receiving, from a first base station, configuration information for radio access network (RAN) visible quality of experience (RVQoE) measurement, performing the RVQoE measurement in an inactive or idle mode, establishing a radio resource control (RRC) connection with a second base station, and transmitting, to the second base station, information on a result of the RVQoE measurement.

### [Advantageous Effects of Invention]

The disclosure provides a device and a method which can effectively provide a service in a wireless communication system.

The disclosure provides a device and a method enabling transmission or reception of a signal for effective quality of experience (QoE) measurement in a wireless communication system.

Advantageous effects obtainable from the disclosure may not be limited to the above-mentioned effects, and other effects which are not mentioned may be clearly understood, through the following descriptions, by those skilled in the art to which the disclosure pertains.

### [Brief Description of Drawings]

FIG. 1 illustrates an example of a wireless communication environment according to embodiments of the disclosure.
FIG. 2 illustrates a structure of a wireless communication system according to embodiments of the disclosure.
FIG. 3 illustrates an example of transition of a radio access state in a wireless communication system according to embodiments of the disclosure.
FIG. 4 illustrates a flow of a signal for configuring and reporting quality of experience (QoE) measurement according to embodiments of the disclosure.
FIG. 5 illustrates a flow of a signal for configuring and reporting management-based QoE measurement according to embodiments of the disclosure.
FIG. 6 illustrates a flow of a signal for configuring and reporting radio access network (RAN) visible QoE measurement according to embodiments of the disclosure.
FIG. 7 illustrates a flow of a signal for multicast broadcast service (MBS) broadcast support between a base station and a UE according to embodiments of the disclosure.
FIG. 8 illustrates an example of an operation for QoE measurement reporting of a UE in an inactive or idle mode according to embodiments of the disclosure
FIG. 9 illustrates an example of an operation for QoE measurement reporting to a base station providing a service of a UE in an inactive or idle mode according to embodiments of the disclosure.
FIG. 10 illustrates an example of an operation of generating configuration information for QoE measurement reporting for a UE in an inactive or idle mode according to embodiments of the disclosure.
FIG. 11 illustrates an example of an operation of configuring configuration information for QoE measurement reporting for a UE in an inactive or idle mode according to embodiments of the disclosure.
FIG. 12 illustrates an example of an operation of configuring, for a UE in an inactive or idle mode, configuration information for QoE measurement reporting through an MCCH according to embodiments of the disclosure.
FIG. 13 illustrates an example of an operation of reporting, by a UE in an inactive or idle mode, packet loss for QoE measurement reporting according to embodiments of the disclosure.
FIG. 14 illustrates a functional configuration of a UE according to embodiments of the disclosure.
FIG. 15 illustrates a functional configuration of a base station according to embodiments of the disclosure.

### [Mode for the Invention]

The terms used in the disclosure are used merely to describe particular embodiments, and may not be intended to limit the scope of other embodiments. A singular expression may include a plural expression unless they are definitely different in a context. The terms used herein, including technical and scientific terms, may have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software.

In the following description, terms referring to device elements (e.g., control unit, processor, artificial intelligence (AI) model, encoder, decoder, autoencoder (AE), and neural network (NN) model) and terms referring to data (e.g., signal, feedback, report, reporting, information, parameter, value, bit, and codeword) are illustratively used for the sake of descriptive convenience. Therefore, the disclosure is not limited by the terms as described below, and other terms referring to subjects having equivalent technical meanings may be used.

Furthermore, various embodiments of the disclosure will be described using terms used in some communication standards (e.g., the 3rd generation partnership project (3GPP)), but they are for illustrative purposes only. Various embodiments of the disclosure may be easily applied to other communication systems through modifications.

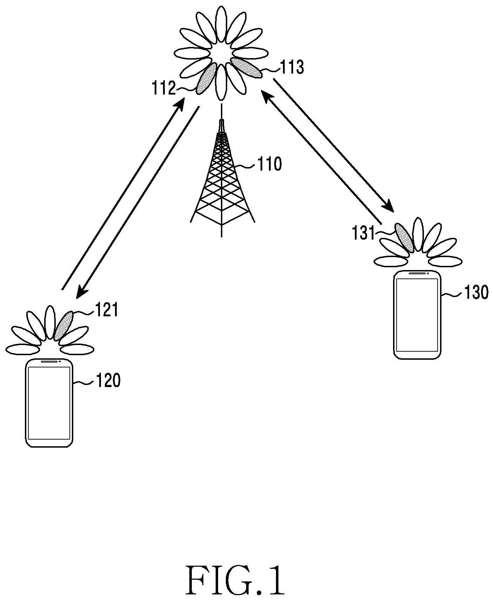

FIG. 1 illustrates a wireless communication system according to various embodiments of the disclosure. FIG. 1 illustrates a base station 110, a terminal 120, and a terminal 130 as some of nodes using a wireless channel in a wireless communication system. Although FIG. 1 illustrates only one base station, other base stations identical or similar to the base station 110 may be further included.

The base station 110 is a network infrastructure which provides wireless access to the terminals 120 and 130. The base station 110 has coverage which is defined as a certain geographical area, based on a distance over which a signal can be transmitted. The base station 110 may be referred to as an "access point (AP)", an "eNodeB (eNB)", a "5th generation node (5G node)", a "wireless point", a "transmission/reception point (TRP)", or any other term having a technical meaning equivalent thereto, in addition to a base station.

Each of the terminal 120 and the terminal 130 is a device used by a user and may communicate with the base station 110 through a wireless channel. In some cases, at least one of the terminal 120 and the terminal 130 may be operated without user involvement. That is, at least one of the terminal 120 and the terminal 130 is a device which performs machine type communication (MTC) and may not be carried by a user. Each of the terminal 120 and the terminal 130 may be referred to as a "user equipment (UE)", a "mobile station", a "subscriber station", a "customer premises equipment (CPE)", a "remote terminal", a "wireless terminal", an "electronic device", a "user device", or any other term having a technical meaning equivalent thereto, in addition to a terminal.

The base station 110, the terminal 120, and the terminal 130 may transmit and receive a wireless signal in a mmWave band (e.g., 28GHz, 30GHz, 38GHz, or over 60 GHz). In regard of this, the base station 110, the terminal 120, and the terminal 130 may perform beamforming in order to improve a channel gain. The beamforming may include transmission beamforming and reception beamforming. That is, the base station 110, the terminal 120, and the terminal 130 may give directivity to a transmission signal or a reception signal. To this end, the base station 110 and the terminals 120 and 130 may select serving beams 112, 113, 121, and 131 through a beam search or beam management procedure. After the serving beams 112, 113, 121, and 131 are selected, subsequent communication may be performed through a resource having a quasi-co-located (QCL) relationship with a resource through which the serving beams 112, 113, 121, and 131 have been transmitted.

According to various embodiments of the disclosure, in describing the disclosure below, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

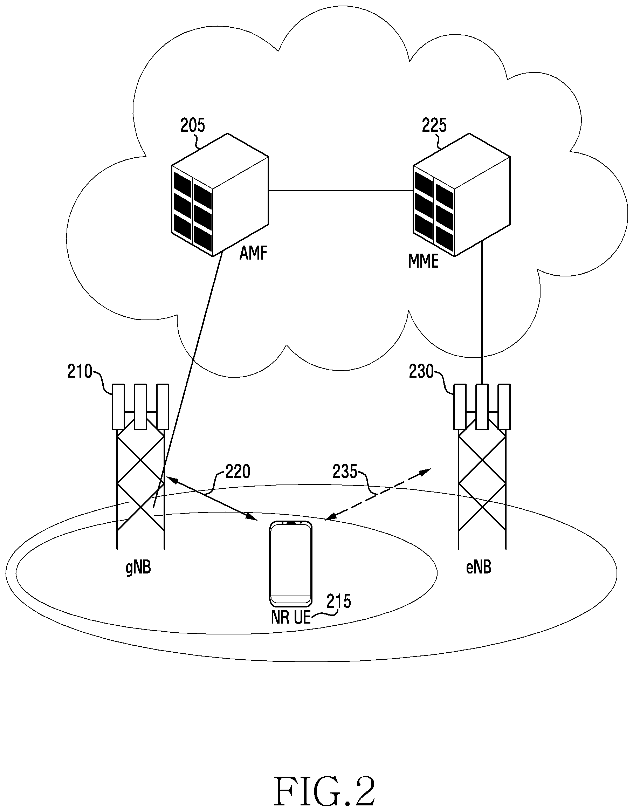

FIG. 2 illustrates a structure of a wireless communication system according to embodiments of the disclosure.

Referring to FIG. 2, a radio access network of a wireless communication system (e.g., new radio (NR)) may include a next-generation base station (e.g., new radio node B, hereinafter gNB) 210 and an access and mobility management function (AMF) 205. A user equipment (new radio user equipment, NR UE or NR terminal) 215 may access an external network via the gNB 210 and the AMF 205.

In FIG. 2, the gNB may correspond to an evolved node B (eNB) of a conventional long term evolution (LTE) system. The gNB may be connected to the NR UE through a radio channel and provide outstanding services as compared to a conventional node B (e.g., eNB). In the wireless communication system, since all user traffic is serviced through a shared channel, a device that collects state information, such as buffer statuses, available transmit power states, and channel states of UEs, and performs scheduling accordingly is required, and the gNB 210 may serve as the device. In general, one gNB may control multiple cells. In order to implement ultrahigh-speed data transmission as compared to the conventional LTE, the wireless communication system may have a bandwidth greater than the conventional maximum bandwidth. The wireless communication system may employ an orthogonal frequency division multiplexing (OFDM) as a radio access technology, and may additionally integrate a beamforming technology therewith. Furthermore, the wireless communication system may employ an adaptive modulation & coding (AMC) scheme for determining a modulation scheme and a channel coding rate according to a channel state of a UE. The AMF 205 may perform functions such as mobility support, bearer configuration, and QoS configuration. The AMF is a device responsible for various control functions as well as a mobility management function for a UE, and may be connected to multiple base stations. In addition, the wireless communication system may interwork with the existing LTE system, and the AMF may be connected to a mobility management entity (MME) 225 via a network interface. The MME may be connected to an eNB 230 that is an existing base station. A UE supporting LTE-NR dual connectivity may transmit/receive data while maintaining connections to both the gNB and the eNB (235).

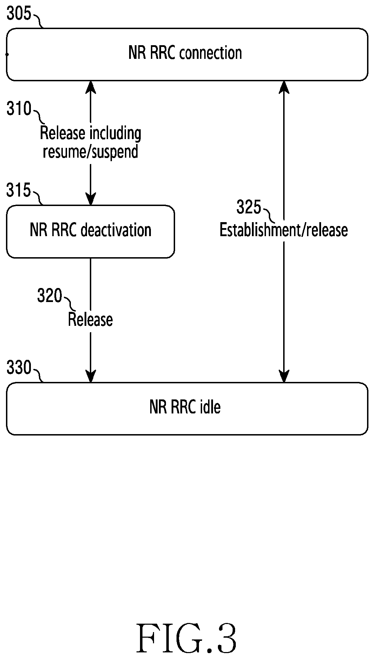

FIG. 3 illustrates an example of transition of a radio access state in a wireless communication system according to embodiments of the disclosure.

A wireless communication system may have three radio access states (radio resource control (RRC) states). A connected mode (RRC_CONNECTED) 305 may be a radio access state in which a UE may transmit or receive data. An idle mode (RRC_IDLE) 330 may be a radio access stat in which the UE monitors whether paging is transmitted to the UE itself. The connected mode and the idle mode are radio access states which are also applied to the legacy LTE system, and the detailed contents thereof may be substantially identical to those of the legacy LTE system. In an NR wireless communication system, a new inactive (RRC_INACTIVE) radio access state 315 may be defined. In the radio access state of the inactive mode, UE context may be maintained in the base station and the UE, and radio access network (RAN)-based paging may be supported. The inactive mode state may have the characteristic below:
- Cell re-selection mobility;
- CN - NR RAN connection (both C/U-planes) has been established for UE;
- The UE AS context is stored in at least one gNB and the UE;
- Paging is initiated by NR RAN;
- RAN-based notification area is managed by NR RAN;
- NR RAN knows the RAN-based notification area which the UE belongs to;

The INACTIVE mode state may transition to the connected mode or the idle mode by using a specific procedure. According to a resume process, the INACTIVE mode may be switched to the connected mode, and the connected mode may be switched to the INACTIVE mode by using a release procedure including suspend configuration information (operation 310). The above-described procedure may include one or more operations including an operation of transmitting or receiving one or more RRC messages to or from the UE and the base station. In addition, through the release procedure after the resumption, the INACTIVE mode may be switched to the idled mode (operation 320). The switching between the connected mode and the idle mode may follow the legacy LTE technology. That is, through the establishment or release procedure, the switching between the modes may be performed (operation 325).

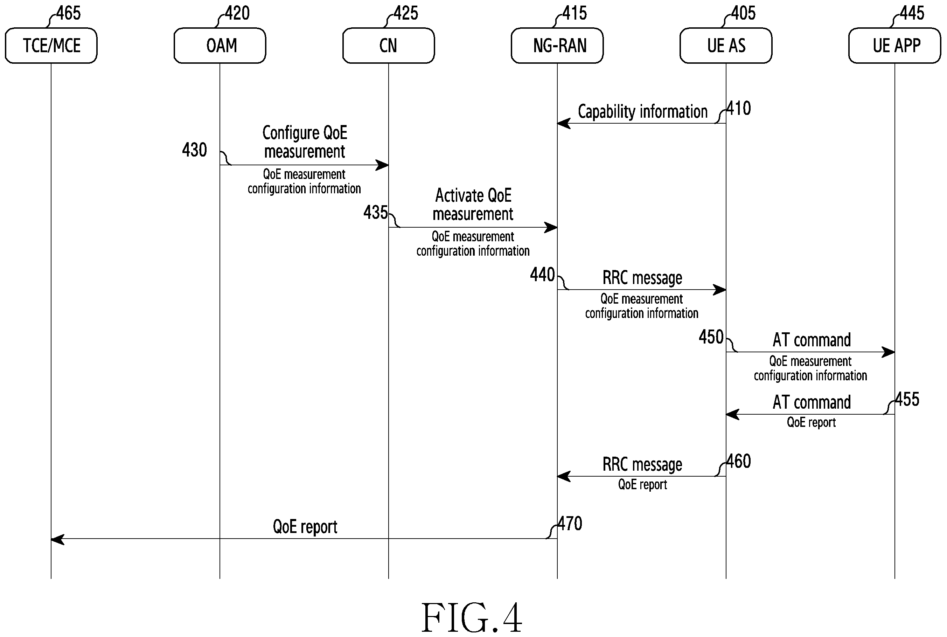

FIG. 4 illustrates a flow of a signal for configuring and reporting quality of experience (QoE) measurement according to embodiments of the disclosure.

Access stratum 405 of the UE may transmit information indicating whether to support quality of experience (QoE) measurement for each service type (e.g., streaming, MTSI, or VR) to a base station (or NG-RAN) 415 through a UE capability message (e.g., UECapabilityInformation) (operation 410). According to an embodiment, the UE may report whether to support RAN visible QoE (RVQoE) for each service type (e.g., streaming or VR) to the base station through a UE capability message. According to an embodiment, the UE may report whether to support UL RRC segmentation of a QoE report message through the UE capability message.

According to an embodiment, the UE capability message may include the abstract syntax notation number one (ASN.1) information and related parameter description as follows. However, according to various embodiments of the disclosure, below information or operation is merely provided as an example, and the disclosure is not limited thereto, and the information or operation may include only a part of the contents below, or random information or operation may be further included.

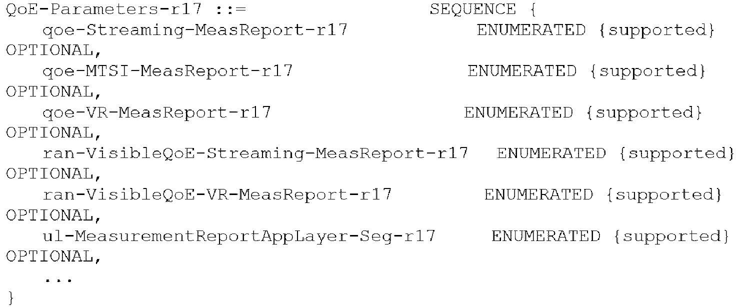

### 4.2.20 → QoE measurement parameters

| **Definitions-for-parameters** | **Per** | **M** | **FDD-TDD-DIFF** | **FR1-FR2-DIFF** |
|---|---|---|---|---|
| ***qoe-Streaming-MeasReport-r17*** | UE | No | No | No |
| Indicates whether the UE supports NR QoE Measurement Collection for streaming services, see TS 26.247 [29]. | | | | |
| ***qoe-MTSI-MeasReport-r17*** | UE | No | No | No |
| Indicates whether the UE supports NR QoE Measurement Collection for MTSI services, see TS 26.114 [30]. | | | | |
| ***goe-VR-MeasReport-r17*** | UE | No | No | No |
| Indicates whether the UE supports NR QoE Measurement Collection for VR services, see TS 26.118 [31]. | | | | |
| ***ran-VisibleQoE-Streaming-MeasReport-r17*** | UE | No | No | No |
| Indicates whether the UE supports RAN visible QoE Measurement Collection for streaming services. | | | | |
| ***ran-VisibleQoE-VR-MeasReport-r17*** | UE | No | No | No |
| Indicates whether the UE supports RAN visible QoE Measurement Collection for VR services. | | | | |
| ***ul-MeasurementReportAppLayer-Seg-r17*** | UE | No | No | No |
| Indicates whether the UE supports RRC segmentation of the MeasurementReportAppLayer message in UL as specified in TS 38.331 [9]. | | | | |

The type of service which can be supported in the LTE may include streaming and multimedia telephony service for Internet protocol (IP) multimedia subsystem (IMS) (MTSI). In the NR, in addition to the type of service which can be supported in the LTE, support for virtual reality (VR) is additionally defined in Rel-17, and multimedia broadcast multicast services (MBMS), extended reality (XR), etc. may be additionally supported in the release later.

Operations administration and maintenance (OAM) 420 may provide a core network (CN) 425 with QoE measurement configuration information (operation 430). The CN having received the configuration information may activate QoE measurement by transmitting the configuration information to the base station (operation 435). The base station having received the configuration information may transfer the configuration information to UE access stratum (AS) through an RRC message (e.g., RRCReconfiguration or RRCResume message) (operation 440). According to an embodiment, the above-described RRC message may include an information element (IE) and related parameter description as follows. However, according to various embodiments of the disclosure, below information or operation is merely provided as an example, and the disclosure is not limited thereto, and the information or operation may include only a part of the contents below, or random information or operation may be further included.

### - AppLayerMeasConfig

The IE *AppLayerMeasConfig* indicates configuration of application layer measurements.

### AppLayerMeasConfig information element

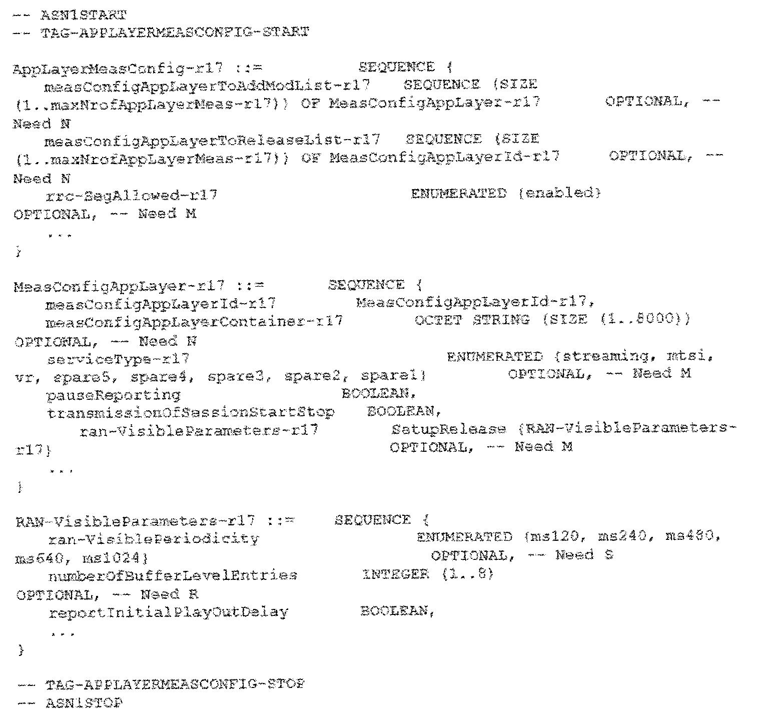

| ***AppLayerMeasConfig* field descriptions** |
|---|
| ***measConfigAppLayerContainer*** |
| The field contains configuration of application layer measurements, see Annex L (normative) in TS 26.247 [XX], clause 16 5 in TS 26 114 [YY] and TS 26 118 [ZZ] |
| ***numberOfBufferLevelEntries*** |
| The field contains the maximum number of buffer level entries that can be reported for RAN visible application layer measurements. |
| ***pauseReporting*** |
| The field indicates whether the transmission of measurementReportAppLayerContainer is paused or not. |
| ***ran-VisiblePeriodicity*** |
| The field indicates the periodicity of RAN visible reporting. Value ms120 indicates 120 ms, value ms240 indicates 240 ms and so on. If no value is indicated and the UE is configured with RAN visible reporting, the same periodicity as indicated in the *measConfigAppLayerContainer* is used. |
| ***reportInitialPlayoutDelay*** |
| The field indicates whether the UE shall report Initial Playout Delay for RAN visible application layer measurements. |
| ***rrc-SegAllowed*** |
| This field, when received in *MeasConfigAappLayerMeasConfigList*, indicates that RRC segmentation of *MeasurementReportAppLayer* is allowed. It may be present only if the UE supports RRC message segmentation. |
| ***serviceType*** |
| Indicates the type of application layer measurement. Value streaming indicates Quality of Experience Measurement Collection for streaming services (see [XXI), value mtsi indicates Quality of Experience Measurement Collection for MTSI (see [YY]). value vr indicates Quallity of Experience Measurement Collection for VR service (see [ZZ]). The network always configures *service Type* when application layer measurements are initially configured and at *fullConfig.* |
| ***transmissionOfSessionStartStop*** |
| The field indicates whether the UE shall transmit indications when sessions in the application layer start and stop. The UE transmits a session start indication upon configuration of this field if a session already has started in the application layer. |

According to an embodiment, the operation of the UE AS having received the RRC message may be as follows. However, according to various embodiments of the disclosure, below information or operation is merely provided as an example, and the disclosure is not limited thereto, and the information or operation may include only a part of the contents below, or random information or operation may be further included.

### 5.3.5.x Application layer configuration

The UE shall:
1> if *measConfigAppLayerToAddReleaseList* is included in *appLayerMeasConfig* within *RRCReconfiguration* or *RRCResume*:
   2> for each *measConfigAppLayerId* value included in the *measConfigAppLayerToReleaseList*:
      3> forward the *measConfigAppLayerId* and inform upper layers about the release of the application layer measurement configuration including any RAN visible configuration;
      3> discard any received application layer measurement report received from upper layers;
      3> consider itself not to be configured to send application layer measurement report for the *measConfigAppLayerId.*
1> if *measConfigAppLayerToAddModList* is included in *appLayerMeasConfig* within *RRCReconfiguration* or *RRCResume*:
   2> for each *measConfigAppLayerId* value included in the *measConfigAppLayerToAddModList*:
      3> if *measConfigAppLayerContainer* is included for the corresponding *MeasConfigAppLayer* configuration:
         4> forward the *measConfigAppLayerContainer*, *the measConfigAppLayerId* and the *serviceType* to upper layers considering the *serviceType*;
      3> consider itself to be configured to send application layer measurement report for the *measConfigAppLayerId* in accordance with 5.7.x;
      3> forward the *transmissionOfSessionStartStop*, if received, to upper layers;
      3> if *ran-VisibleParameters* is set to setup and the parameters have been received;
         4> forward the *measConfigAppLayerId*, the *ran-VisiblePeriodicity*, the *numberOfBufferLevelEntries* and the *reportInitialPlayOutDelay* to upper layers considering the *serviceType*;
      3> else if *ran-VisibleParameters* is set to release:
         4> forward the *measConfigAppLayerId* and inform upper layers about the release of the RAN visible application layer measurement configuration;

3> *if pauseReporting* is set to *true*:
   4> if at least one segment, but not all segments, of a segmented *MeasurementReportAppLayer* message containing an application layer measurement report associated with the *measConfigAppLayerId* has been submitted to lower layers for transmission:
      5> submit the remaining segments of the *MeasurementReportAppLayer* message to lower layers for transmission;
   4> suspend submitting application layer measurement report containers to lower layers for the application layer measurement configuration associated with the *measConfigAppLayerId*;
   4> store any previously or subsequently received application layer measurement report containers associated with the *measConfigAppLayerId* for which no segment, or full message, has been submitted to lower layers for transmission;
3> else if *pauseReporting* is set to *false* and if transmission of application layer measurement report containers has previously been suspended for the application layer measurement configuration associated with the *measConfigAppLayerId*:
   4> submit stored application layer measurement report containers to lower layers for the application layer measurements configuration associated with the *measConfigAppLayerId;*
   4> resume submitting application layer measurement report containers to lower layers for the application layer measurement configuration associated with the *measConfigAppLayerId*;

NOTE: The UE may discard reports when the memory reserved for storing application layer measurement reports becomes full.
NOTE: The transmission of RAN visible reports is not paused when *pauseReporting* is set to *true.*

As described above, in a case of an operation related to QoE measurement configuration included in measConfigAppLayerToAddModList, an AS layer of the UE may transfer the configuration information to an upper layer or an application layer of the UE (UE APP) 445 through an AT command message (operation 450). In a case of an operation related to QoE measurement configuration included in measConfigAppLayerToAddReleaseList, the AS layer of the UE may transfer an AT command message instructing to delete the stored configuration information to the APP of the UE.

The UE APP may perform QoE measurement according to the received configuration information. The UE APP may report, based on the configuration information, the measured QoE result to the UE AS through the AT command message (operation 455). The UE AS having received the QoE result may report the measured QoE result to the base station through an RRC message (e.g., a MeasurementReportAppLayer message) (operation 460). For the QoE measurement result report, information on SRB4 may be used. According to an embodiment, the MeasurementReportAppLayer message may include the ASN.1 information and related parameter description as follows. However, according to various embodiments of the disclosure, below information or operation is merely provided as an example, and the disclosure is not limited thereto, and the information or operation may include only a part of the contents below, or random information or operation may be further included.

### - MeasurementReportAppLayer

The *MeasurementReportAppLayer* message is used for sending application layer measurement report.
Signalling radio bearer: SRB4
RLC-SAP: AM
Logical channel: DCCH
Direction: UE to Network

### MeasurementReportAppLayer message

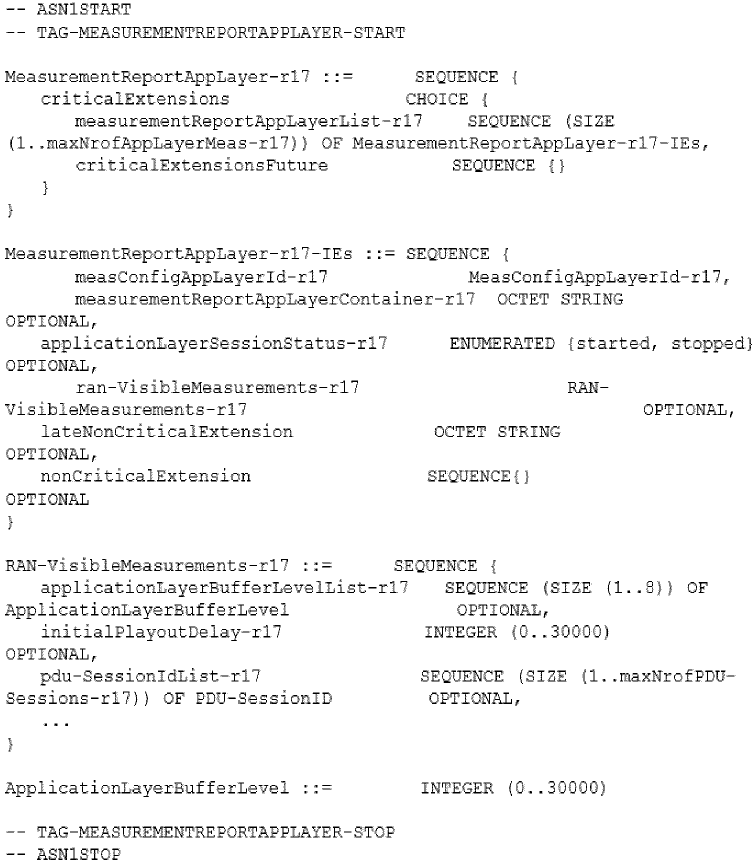

| ***MeasurementReportAppLayer* field descriptions** |
|---|
| ***applicationLayerBufferLevel*** |
| Indicates the application layer buffer level in ms. Value 1 corresponds to 10ms, value 2 corresponds to 20 ms and so on. If the buffer level is larger than the maximum value of 30000 (5 minutes), the UE reports 30000. |
| ***applicationLayerSessionStatus*** |
| Indicates that a QoE session in the application layer starts or stops. |
| ***initialPlayoutDelay*** |
| Indicates the application layer initial playout delay in ms. Value 1 corresponds to 1ms, value 2 corresponds to 2 ms and so on. If the intial playout delay is larger than the maximum value of 30000ms, the UE reports 30000ms. |
| ***measurementReportAppLayerContainer*** |
| The field contains application layer measurements, see Annex L (normative) in TS 26.247 [XX], clause 16.5 in TS 26.114 [YY] and TS 26.118 [ZZ]. |
| ***pdu-SessionIdList*** |
| Contains the identity of the PDU session, or the identities of the PDU sessions, used for application data flows subject to the RAN visible application layer measurements. |

According to an embodiment, the detailed operation of the UE AS reporting the measured QoE may be as follows. However, according to various embodiments of the disclosure, below information or operation is merely provided as an example, and the disclosure is not limited thereto, and the information or operation may include only a part of the contents below, or random information or operation may be further included.

### 5.7.x.2 Initiation

A UE capable of application layer measurement reporting in RRC _CONNECTED may initiate the procedure when configured with application layer measurement, i.e. when *appLayerMeasConfig* and SRB4 have been configured by the network.

Upon initiating the procedure, the UE shall:
1> for each *measConfigAppLayerId*:
   2> if the UE AS has received, but not sent, application layer measurement report from upper layers; and
   2> if the application layer measurement reporting has not been suspended for the *measConfigAppLayerId* associated with the application layer measurement report according to clause 5.3.5.x:
      3> set the *measurementReportAppLayerContainer* in the *MeasurementReportAppLayer* message to the received value of the application layer measurement report;
   2> set the *measConfigAppLayerId* in the *MeasurementReportAppLayer* message to the value of the *measConfigAppLayerId* received together with application layer measurement report information;
   2> if session start or stop information has been received from upper layers for the *measConfigAppLayerId*:
      3> set the *applicationLayerSessionStatus* to the received value of the application layer measurement information;
   2> if RAN visible application layer measurement report has been received from upper layers:
      3> for each *applicationLayerBufferLevel* value in the received RAN visible application layer measurement report:
         4> set the *applicationLayerBufferLevel* values in the *applicationlayerBufferLevelLIst* to the buffer level values received from the upper layer in the order with the first *applicationLayerBufferLevel* value set to the newest received buffer level value, the second *applicationLayerBufferLevel* value set to the second newest received buffer level value, and so on until all the buffer level values received from the upper layer have been assigned or the configured maximum number *of applicationLayerBufferLevel* values have been set, if any;
      3> set the *initialPlayoutDelay* to the received value in the RAN visible application layer measurement report, if any;
      3> for each PDU session ID value indicated in the received RAN visible application layer measurement report, if any:
         4> set the *PDU-SessionID* field in *the pdu-SessionIdList* to the indicated PDU session ID value;
   2> if the RRC message segmentation is enabled based on the field *rrc-SegAllowed* received in *appLayerMeasConfig*, and the encoded RRC message is larger than the maximum supported size of a PDCP SDU specified in TS 38.323 [5]:
      3> initiate the UL message segment transfer procedure as specified in clause 5.7.7;
   2> else:
      3> submit the *MeasurementReportAppLayer* message to lower layers for transmission upon which the procedure ends.

The base station may transfer information on the received measurement result information to a final server (a trace collection entity (TCE) or a measurement collection entity (MCE) 465) collecting the measurement report (operation 470).

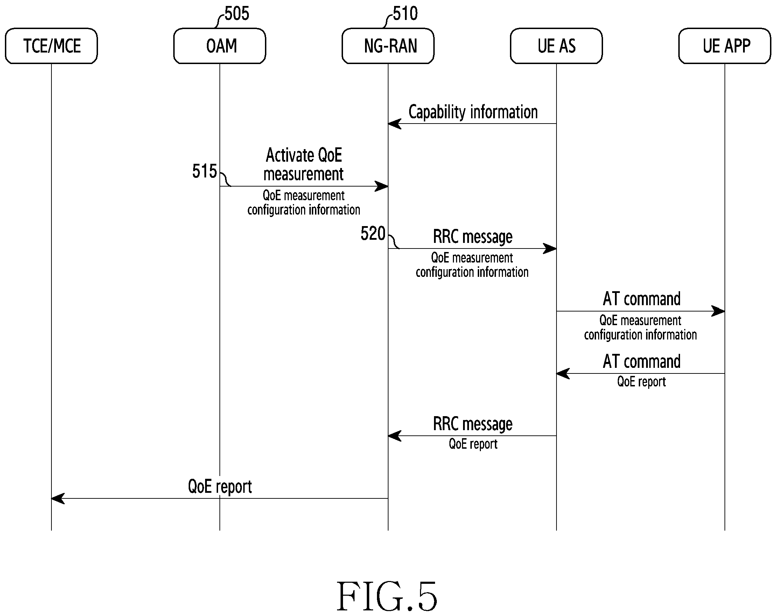

FIG. 5 illustrates a flow of a signal for configuring and reporting management-based QoE measurement according to embodiments of the disclosure. The management-based QoE configuration and report procedure may have a similar signal flow as that illustrated in FIG. 4. According to, referring to FIG. 5, only a different from the management-based scheme is described in detail, and other procedures and descriptions may be considered to be substantially identical to the description of FIG. 4.

In the management-based scheme, the OAM 505 directly transmits a QoE measurement configuration to the base station 510 without going through the CN so as to activate QoE measurement (operation 515). The base station having received the QoE measurement configuration information may search for one or multiple UEs satisfying several conditions (e.g., an area scope, an application layer capability, a service type, etc.). The base station may transfer, through an RRC message (e.g., RRCReconfiguration message or RRCResume), QoE measurement configuration received from each of the UEs (operation 520). Other procedures and message types may be substantially identical to the description (e.g., signaling-based scheme) of FIG. 4.

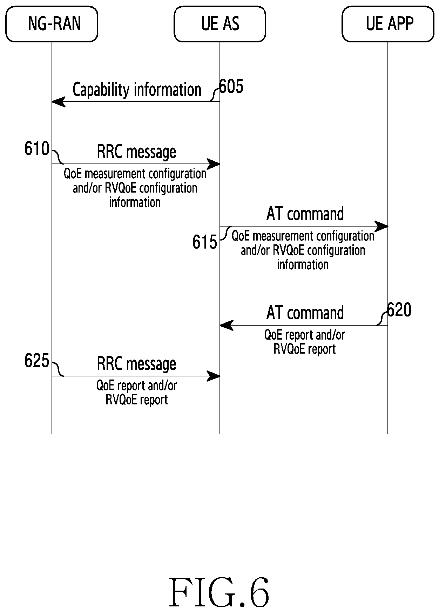

FIG. 6 illustrates a flow of a signal for configuring and reporting radio access network (RAN) visible QoE measurement according to embodiments of the disclosure.

As illustrated in FIGS. 4 and 5, QoE measurement may be configured by OAM, the a QoE measurement report generated according thereto may be collected in TCE/MCE and used for network optimization. When the UE transmits a reporting for OAM-based QoE measurement to the base station and the base station receives the QoE measurement report, the base station may not be able to immediately read and understand the received measurement report. The measurementReportAppLayerContainer of a MeasurmentReportAppLayer message received by the base station may include a measurement report generated by an application layer of the UE, but the measurement report is stored in the form of an OCTEC STRING, and thus the base station or an RRC layer of the base station may not be able to immediately read or understand the same. To solve this problem, enable the base station to read the QoE measurement report, and utilize the same for network optimization such as radio resource management, RAN visible QoE (RVQoE) has been defined in and introduced to the 3GPP. The UE may report whether to support RVQoE measurement to the base station for each service type (e.g., streaming, VR, etc.) (operation 605). In this case, a UECapabilityInformation message may be used. For a streaming service, the UE may configure a ran-VisibleQoE-Streaming-MeasReport-r17 parameter, and for a VR service, the UE may configure a ran-VisibleQoE-VR-MeasReport-r17 parameter.

The RVQoE measurement configuration may be generated by the base station and configured for the UE (operation 610). In this case, the RVQoE measurement configuration may be transferred together with the OAM-based QoE measurement configuration. The RVQoE measurement configuration may be configured or released by the ran-VisibleParameters-r17 parameter. The above-described parameter may be included in the RAN-VisibleParameters IE, and through this, the base station may configure or indicate, to the UE or the APP of the UE, an RVQoE measurement periodicity (ran-VisiblePeriodicity), a maximum number of reportable buffer levels (numberOfBufferLevelEntries), whether the UE reports an initial playout delay (reportInitialPlayoutDelay), etc.

The AS layer of the UE may transfer the received configuration information to the APP layer of the UE (operation 615). In this case, the RVQoE measurement configuration may be transferred together with the OAM-based QoE measurement configuration. The APP of the UE may generate an RVQoE measurement report by performing, based on the received RVQoE measurement configuration information, QoE measurement, and may transmit the generated RVQoE measurement report to the AS layer of the UE (operation 620). In this case, the RVQoE measurement report may be transferred together with the OAM-based QoE measurement report. The transmission or reception of the RVQoE measurement configuration information or information on the RVQoE measurement report between the UE AS and the UE APP may be performed through the AT command procedure similar to the operations in FIGS. 3 to 5.

The AS layer of the UE having received the QoE measurement report, etc. may transfer the same to the base station (operation 625). In this case, the RVQoE measurement report may be transferred together with the OAM-based QoE measurement report. In operation 625, the RVQoE measurement report may be transmitted through the RAN-VisibleMeasurements IE in the MeasurementReportAppLayer message. The above-described IE may include information such as a buffer level list of the APP layer (applicationLayerBufferLevelList), an initial playout delay (initialPlayoutDelay), and an involved PDU session ID list (pdu-SessionIdList). The base station may immediately read information on the received RVQoE report and utilize the same to perform network optimization. For example, by allocating more radio resources to the UE experiencing poor QoE for a specific service, the QoE of the corresponding UE can be improved.

Referring to FIG. 6, according to an embodiment, a detailed description related to the RAN visible QoE measurement may be as follows. However, according to various embodiments of the disclosure, below information or operation is merely provided as an example, and the disclosure is not limited thereto, and the information or operation may include only a part of the contents below, or random information or operation may be further included.

### X.4 RAN Visible QoE Measurements

RAN visible QoE measurements are configured by the NG-RAN node, where a subset of QoE metrics is reported from the UE as an explicit IE readable by the NG-RAN node. RAN visible QoE measurements (e.g., RAN visible QoE metrics, RAN visible QoE values) could be utilized by the NG-RAN node for network optimization. RAN visible QoE measurements are supported for the DASH streaming and VR services. The NG-RAN node configures the RAN visible QoE measurement to collect all or some of the available RAN visible QoE metrics, where the indication of metric availability is received from the OAM or CN. The set of available RAN visible QoE metrics is a subset of the metrics which are already configured as part of QoE measurement configuration encapsulated in the transparent container. The PDU session ID(s) corresponding to the service that is subject to QoE measurements can also be reported by the UE along with the RAN visible QoE measurement results.

RAN visible QoE measurements can be reported with a reporting periodicity different from the one of regular QoE. If there is no reporting periodicity defined in the RAN visible QoE configuration, RAN visible QoE reports should be sent together with the legacy QoE reports.

RAN visible application layer measurement is supported only for streaming and VR services. The gNB can use RAN visible application layer measurement configurations to instruct the UE to collect application layer measurements for RRM purposes. Multiple simultaneous RAN visible application layer measurements configuration and reports can be supported for RAN visible application layer measurement, and each RAN visible application layer measurement configuration and report is identified by the same *measConfigAppLayerId* as the application layer measurement configuration and measurement report. gNB configures the required RAN visible QoE metrics in the RAN visible application measurement configuration for the UE to report. After receiving the RAN visible application layer measurement configuration, the UE RRC layer forwards the configuration to the application layer, indicating the service type, the RRC identifier and the periodicity. RAN visible application layer configuration can only be configured if there is a corresponding application layer measurement configuration for the same *service Type* type configured at the UE. The application layer sends the RAN visible application layer measurement report associated with the RRC identifier to the UE's AS layer. UE can send both RAN visible application layer measurement reports and the application layer measurement reports to the gNB in the same *MeasurementReportAppLayer* message. gNB can release one or multiple RAN visible application layer measurement configurations from the UE in one RRC message at any time.

The UE still reports the configured RAN visible application layer measurements, even though the corresponding non RAN visible application layer measurement reporting is paused.

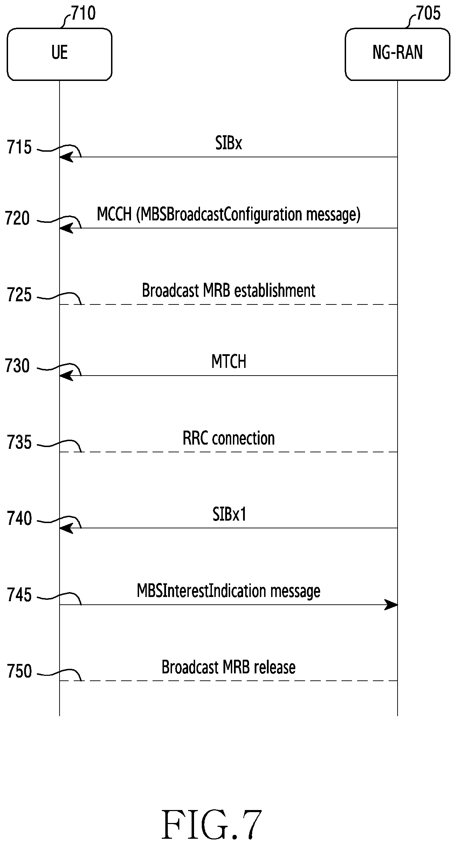

FIG. 7 illustrates a flow of a signal for multicast broadcast service (MBS) broadcast support between a base station and a UE according to embodiments of the disclosure.

In operation 715, a UE 710 in an idle mode (RRC IDEL) or an inactive mode (RRC_INACTIVE) may camp on a base station 705 or a cell providing SIBx and receive the SIBx. A connected mode (RRC_CONNECTED) UE may also receive the SIBx from the base station. The SIBx may include information required for the UE to acquire multicast/broadcast service (MBS) control channel (MCCH) information required for MBS broadcast reception. The MCCH may be defined as follows.

MCCH: A point-to-multipoint downlink channel used for transmitting MBS broadcast control information associated to one or several MTCH(s) from the network to the UE.

According to an embodiment, the ASN.1 format of the SIBx may be as follows. However, according to various embodiments of the disclosure, below information or operation is merely provided as an example, and the disclosure is not limited thereto, and the information or operation may include only a part of the contents below, or random information or operation may be further included.

### - SIBx

*SIBx* contains the information required to acquire the MCCH configuration for MBS broadcast.

### SIBx information element

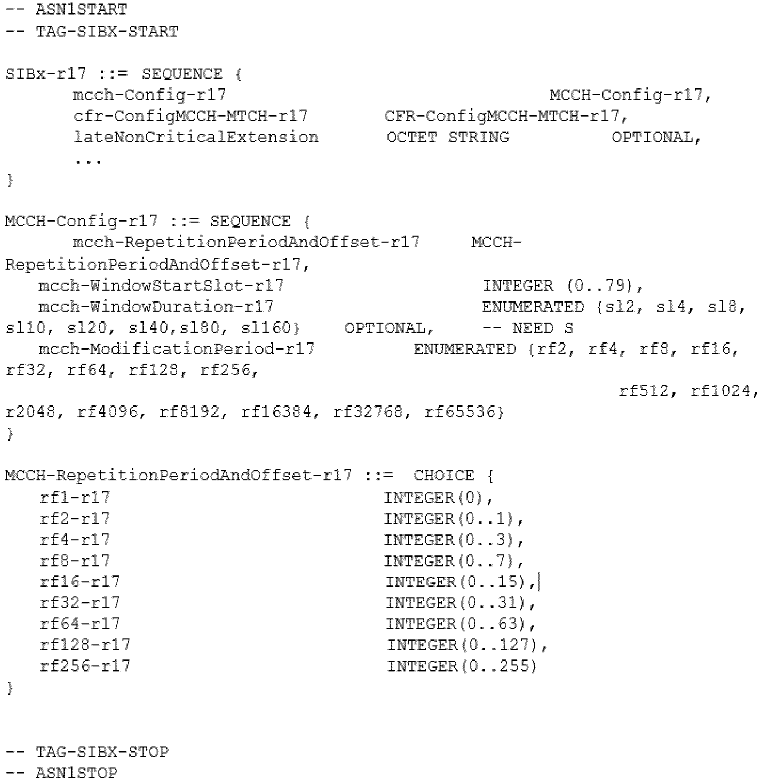

| ***SIBx* field descriptions** |
|---|
| ***mcch-WindowDuration*** |
| Indicates, starting from the slot indicated by *mcch-WindowStartSlot,* the duration in slot during which MCCH may be scheduled. Absence of this field means that MCCH is only scheduled in the slot indicated by *mcch-WindowStartSlot.* |
| ***mech-ModificationPeriod*** |
| Defines periodically appearing boundaries, i.e. radio frames for which SFN mod *mcch-ModificationPeriod =* 0. The contents of different transmissions of MCCH information can only be different if there is at least one such boundary in-between them. Value rf2 corresponds to two radio frames, value rf4 corresponds to four radio frames and so on. |
| ***mcch-RepetitionPeriodAndOffset*** |
| Defines the length and the offset of the MCCH repetition period. rf1 corresponds to a repetition period length of one radio frame, rf2 corresponds to a repetition period length of two radio frames and so on. The corresponding integer value indicates the offset of the repetition period in the number of radio frames. MCCH is scheduled in radio frames for which: SFN mod repetition period length = offset of the repetition period. |
| ***mcch-WindowStartSlot*** |
| Indicates the slot in which MCCH transmission window starts. |

According to an embodiment, in operation 720, when the UE supporting the MBS attempts to receive (or is interested in receiving) the MBS broadcast, or is receiving the MBS broadcast service, the UE may acquire an MBSBroadcastConfiguration message on the MCCH after entering the cell providing the SIBx or after receiving an update notification of MCCH information. This may be described in Rel-17 TS 38.331 as follows. However, according to various embodiments of the disclosure, below information or operation is merely provided as an example, and the disclosure is not limited thereto, and the information or operation may include only a part of the contents below, or random information or operation may be further included.

### 5.X.2.3 MCCH information acquisition by the UE

An MBS capable UE interested to or receiving an MBS broadcast service shall:
1> if the procedure is triggered by an MCCH information change notification:
   2> start acquiring the *MBSBroadcastConfiguration* message on MCCH from the slot in which the change notification was received;
1> if the UE enters a cell broadcasting *SIBx:*
   2> acquire the *MBSBroadcastConfiguration* message on MCCH at the next repetition period;

According to an embodiment, MCCH information updating may be described in Rel-17 TS 38.331 as follows. However, according to various embodiments of the disclosure, below information or operation is merely provided as an example, and the disclosure is not limited thereto, and the information or operation may include only a part of the contents below, or random information or operation may be further included.

### 5.X.1.3 MCCH information validity and notification of changes

Change of MCCH information only occurs at specific radio frames, i.e. the concept of a modification period is used. Within a modification period, the same MCCH information may be transmitted a number of times, as defined by its scheduling (which is based on a repetition period).

When the network changes (some of) the MCCH information, it notifies the UEs about the change via PDCCH which schedules the MCCH in every repetition period in the current modification period.

Upon receiving a change notification, a UE receiving or interested to receive MBS services transmitted using MBS broadcast acquires the new MCCH information starting from the same slot. The UE applies the previously acquired MCCH information until the UE acquires the new MCCH information. The notification is transmitted with a 2-bit bitmap, see TS 38.212 [17] clause 7.3.1.2.1. The MSB in the 2-bit bitmap, when set to '1', indicates the start of MBS service(s). The LSB in the 2-bit bitmap, when set to '1', indicates modification of MCCH information other than the change caused by start of new MBS service(s), e.g. modification of a configuration of an on-going MBS session(s), MBS session(s) stop or neighbouring cell information modification.

According to an embodiment, the ASN.1 format of the MBSBroadcastConfiguration message may be as follows. However, according to various embodiments of the disclosure, below information or operation is merely provided as an example, and the disclosure is not limited thereto, and the information or operation may include only a part of the contents below, or random information or operation may be further included.

### MBSBroadcastConfiguration message

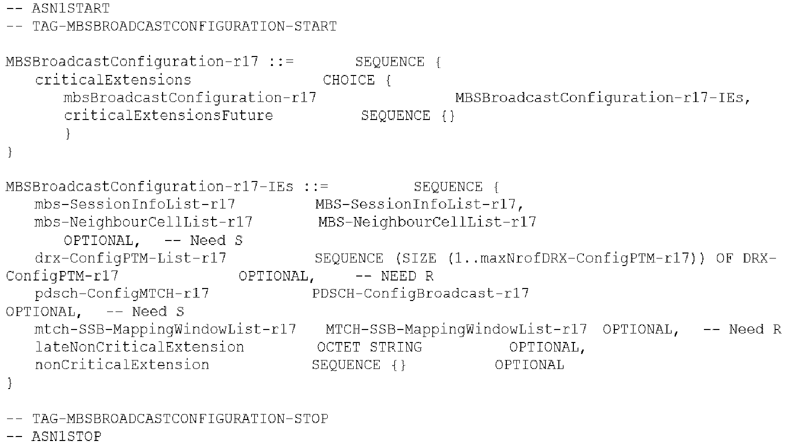

| ***MBSBroadcastConfiguration* field descriptions** |
|---|
| ***pdsch-ConfigMTCH*** |
| Provides parameters for acquiring the PDSCH for MTCH. The UE shall use parameters in *pdsch-ConfigMCCH* also for PDSCH of MTCH when this field is absent |
| ***mbs-SessionInfoList*** |
| Provides the configuration of each MBS session provided by MBS broadcast in the current cell. |
| ***mbs-NeighbourCellList*** |
| List of neighbour cells providing MBS broadcast services via broadcast MRB. This field is used by the UE together with *mtch-NeighbourCell* field signalled for MBS session in the corresponding *MBS-SessionInfo.* When an empty list is signalled, the UE shall assume that MBS broadcast services listed in the *MBSBroadcastConfiguration* message are not provided via broadcast MRB in any neighbour cell. When the field is absent, the current serving cell does not provide information about MBS broadcast services in the neighbouring cells, i.e. the UE cannot determine the presence or absence of an MBS service in neighbouring cells based on the absence of this field |

According to an embodiment, the above-described sessionInfoList parameter may include information on multiple MBS sessions serviced in a current cell, and the ASN.1 format of the sessionInfoList parameter may be as follows. However, according to various embodiments of the disclosure, below information or operation is merely provided as an example, and the disclosure is not limited thereto, and the information or operation may include only a part of the contents below, or random information or operation may be further included.

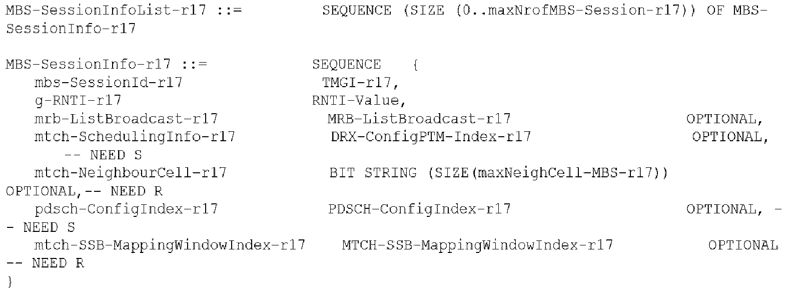

Each MBS session may be distinguished by an MBS session ID (the above-described mbs-SessionId) corresponding to a temporary mobile group identity (TMGI). The TMGI may include a public land mobile network (PLMN) ID of an operator and a service ID distinguished in the PLMN. The g-RNTI may mean a radio network temporary identifier (RNTI) scrambling transmission and scheduling information of an MBS traffic channel (MTCH).

In operation 725, the UE may perform broadcast MBS radio bearer (MRB) establishment to receive an MBS broadcast session of interest. The broadcast MRB establishment of the UE may be performed for the reasons below.

Upon start of the MBS session, upon entering a cell providing an MBS broadcast service UE is interested in, upon becoming interested in the MBS broadcast service, upon removal of UE capability limitations inhibiting reception of the MBS broadcast service UE is interested in.

In operation 730, the UE may receive MBS broadcast data through the MBS traffic channel (MTCH). The MTCH may mean below.

A point-to-multipoint downlink channel for transmitting MBS data of either multicast session or broadcast session from the network to the UE.

To receive the MTCH, the UE may decode a physical downlink control channel (PDCCH) scrambled by the group RNTI (g-RNTI). The g-RNTI required for decoding of the PDCCH may be allocated to each MBS broadcast session (e.g., for each mbs-SessionId, or for each temporary mobile group identity (TMGI)) through the MBS-SessionInfoList IE included in the MBSBroadcastConfiguration message, and accordingly, multiple g-RNTIs may be provided in the form of a list.

According to an embodiment, the procedures including the operations 725 and 730 may be described in Rel-17 TS 38.331 as follows. However, according to various embodiments of the disclosure, below information or operation is merely provided as an example, and the disclosure is not limited thereto, and the information or operation may include only a part of the contents below, or random information or operation may be further included.

### 5.X.3.3 Broadcast MRB establishmtent

Upon a broadcast MRB establishment, the UE shall:
1> establish a PDCP entity and an RLC entity in accordance with *MRB-InfoBroadcast* for this broadcast MRB included in the *MBSBroadcastConfiguration* message and the configuration specified in 9.1.1.Y;
1> receive DL-SCH on the cell where the *MBSBroadcastConfiguration* message was received for the MBS broadcast *service Type* for which the broadcast MRB is established and using *g-RNTI* and *mtch-SchedulingInfo* (if included) in this message for this MBS broadcast service;
1> configure the physical layer in accordance with the *mbs-SessionInfoList, searchSpaceMTCH, pdsch-ConfigMTCH*, applicable for the broadcast MRB, as included in the *MBSBroadcastConfiguration* message;
1> inform upper layers about the establishment of the broadcast MRB by indicating the corresponding *tmgi;*
1> if an SDAP entity with the received *tmgi* does not exist:
   2> establish an SDAP entity as specified in TS 37.324 [24] clause 5.1.1.

In operation 735, the UE may configure an RRC connection and transition to the connected mode. Alternatively, without the process of operation 735, the UE may be already in the connected mode.

In operation 740, the UE may receive SIBx1. According to an embodiment, the SIBx1 may include a mapping relationship between the frequency and the MBS service, and the ASN.1 format may be as follows. However, according to various embodiments of the disclosure, below information or operation is merely provided as an example, and the disclosure is not limited thereto, and the information or operation may include only a part of the contents below, or random information or operation may be further included.

### SIBx1 Information element

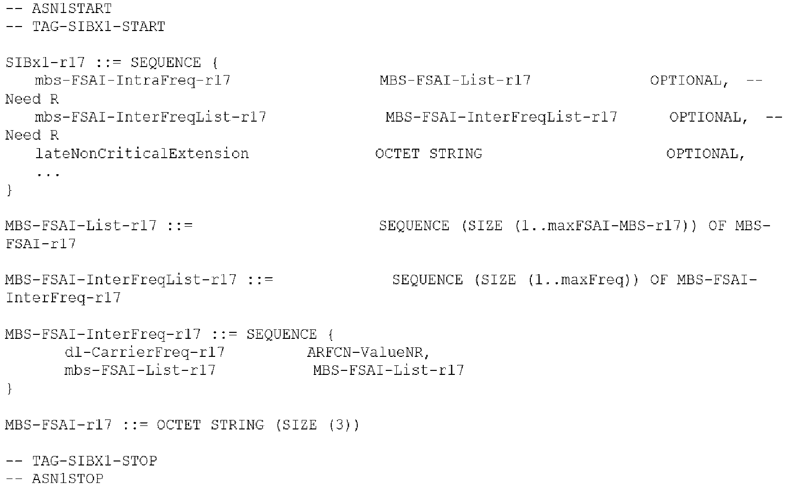

| ***SIBx1* field descriptions** |
|---|
| ***mbs-FSAI-InterFreqList*** |
| Contains a list of neighboring frequencies including additional bands, if any, that provide MBS services and the corresponding MBS FSAls. |
| ***mbs-FSAI-IntraFreq*** |
| Contains the list of MBS FSAIs for the current frequency. For MBS service continuity, the UE shall use all MBS FSAIs listed in *mbs-FSAI-IntraFreq* to derive the MBS frequencies of interest. |

When there is SIBx1, implicit MBSInterestIndication message reporting may be enabled. When there is no SIBx1, implicit MBSInterestIndication message reporting may be disabled. The order of operations 735 and 740 may be changed.

In operation 745, the connected-mode UE supporting the MBS may transmit the MBSInterestIndication message to inform the base station of the MBS broadcast service that the UE is receiving or is interested in and the related frequency. In addition, the UE may transmit the MBSInterestIndication message to transmit priority information of the MBS broadcast compared to the unicast. The ASN.1 format of the MBSInterestIndication message may be as follows. However, according to various embodiments of the disclosure, below information or operation is merely provided as an example, and the disclosure is not limited thereto, and the information or operation may include only a part of the contents below, or random information or operation may be further included.

### MBSinterestindication

The *MBSInterestIndication* message is used to inform network that the UE is receiving/ interested to receive or no longer receiving/ interested to receive MBS broadcast service(s) via a broadcast MRB.
Signalling radio bearer: SRB1
RLC-SAP: AM
Logical channel: DCCH
Direction: UE to Network

### MBSInterestIndication message

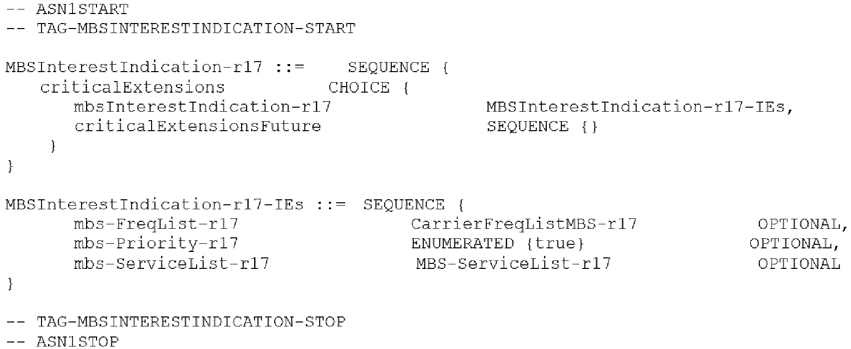

| ***MBSInterestindication* field descriptions** |
|---|
| ***mbs-FreqList*** |
| List of MBS frequencies on which the UE is receiving or interested to receive MBS broadcast service via a broadcast MRB. |
| ***mbs-Priority*** |
| Indicates whether the UE prioritises MBS broadcast reception above unicast and MBS multicast reception. The field is present (i.e. value *true*), if the UE prioritises reception of all listed MBS frequencies above reception of any of the unicast bearers. Otherwise the field is absent. |
| ***mbs-ServiceList*** |
| List of MBS broadcast services which the UE is receiving or interested to receive. |

According to an embodiment, the MBSInterestIndication message may be configured and transmitted based on the procedure below. However, according to various embodiments of the disclosure, below information or operation is merely provided as an example, and the disclosure is not limited thereto, and the information or operation may include only a part of the contents below, or random information or operation may be further included.

### 5.X.4.1 General

The purpose of this procedure is to inform the network that the UE in RRC_CONNECTED state is receiving or is interested to receive MBS broadcast service(s) and to inform the network about the priority of MBS broadcast versus unicast reception. MBS Interest Indication can only be sent after AS security activation.

### 5.X.4.2 Initiation

An MBS capable UE in RRC_CONNECTED may initiate the procedure in several cases including upon successful connection establishment, upon entering or leaving the broadcast service area, upon MBS broadcast session start or stop, upon change of interest, upon change of priority between MBS broadcast reception and unicast reception, upon change to a PCell broadcasting *SIBx1*.

Upon initiating the procedure, the UE shall:
1> if *SIBx1* is provided by the PCell:
   2> ensure having a valid version of *SIBx1* for the PCell;
   2> if the UE did not transmit MBS Interest Indication since last entering RRC _CONNECTED state; or
   2> if since the last time the UE transmitted an MBS Interest Indication, the UE connected to a PCell not broadcasting *SIBx1*:
      3> if the set of MBS broadcast frequencies of interest, determined in accordance with 5.x.4.3, is not empty:
         4> set the contents of MBS Interest Indication according to 5.x.4.5 and initiate transmission of the *MBSInterestIndication* message;
   2> else:
      3> if the set of MBS broadcast frequencies of interest, determined in accordance with 5.x.4.3, is different from *mbs-FreqList* included in the last transmission of the MBS Interest Indication; or
      3> if the prioritisation of reception of all indicated MBS broadcast frequencies compared to reception of any of the established unicast bearers has changed since the last transmission of the MBS Interest Indication:
         4> set the contents of MBS Interest Indication according to 5.x.4.5 and initiate transmission of the *MBSInterestIndication* message;
         NOTE: The UE may send MBS Interest Indication even when it is able to receive the MBS services it is interested in i.e. to avoid that the network allocates a configuration inhibiting MBS broadcast reception.
      3> else if *SIBx* is provided by the PCell:
         4> if since the last time the UE transmitted the MBS Interest Indication, the UE connected to a PCell not broadcasting *SIBx*; or
         4> if the set of MBS broadcast services of interest determined in accordance with 5.x.4.4 is different from *mbs-ServiceList* included in the last transmission of the MBS Interest Indication:
            5> set the contents of MBS Interest Indication according to 5.x.4.5 and initiate the transmission of *MBSInterestIndication* message.

### 5.X.4.3 MBS frequencies of interest determination

The UE shall:
1> consider a frequency to be part of the MBS frequencies of interest if the following conditions are met:
   2> at least one MBS session the UE is receiving or interested to receive via a broadcast MRB is ongoing or about to start; and
      NOTE 1: The UE may determine whether the session is ongoing from the start and stop time indicated in the User Service Description (USD), see TS 38.300 [2] or TS 23.247 [xx].
   2> for at least one of these MBS sessions *SIBx1* acquired from the PCell includes for the concerned frequency one or more MBS FSAIs as indicated in the USD for this session; and
      NOTE 2: The UE considers a frequency to be part of the MBS frequencies of interest even though NG-RAN may (temporarily) not employ a broadcast MRB for the concerned session, i.e. the UE does not verify if the session is indicated on MCCH.
   2> the *supportedBandCombination* the UE included in *UE-NR-Capability* contains at least one band combination including the set of MBS frequencies of interest (i.e. the UE is capable of simultaneously receiving broadcast MRBs on the set of MBS frequencies of interest);
   NOTE 3: When evaluating whether the UE is capable of simultaneously receiving broadcast MRBs on the set of MBS frequencies of interest, the UE does not take into account the serving frequencies that it is currently configured with i.e. the UE only considers MBS frequencies it is interested to receive regardless of whether these can be received together with the current serving cells or not.

### 5.X.4.4 MBS services of interest determination

The UE shall:
1> consider an MBS service to be part of the MBS services of interest if the following conditions are met:
   2> the UE is receiving or interested to receive this service via a broadcast MRB; and
   2> the session of this service is ongoing or about to start; and
   2> one or more MBS FSAIs in the USD for this service is included in *SIBx1* acquired from the PCell for a frequency belonging to the set of MBS frequencies of interest, determined according to 5.x.4.3.
NOTE 1: The UE may determine whether the session is ongoing from the start and stop time indicated in the User Service Description (USD), see TS 38.300 [2] or TS 23.247 [xx].

### 5.X.4.5 Setting of the contents of MBS Interest Indication

The UE shall set the contents of the MBS Interest Indication as follows:
1> if the set of MBS frequencies of interest, determined in accordance with 5.x.4.3, is not empty:
   2> include *mbs-FreqList* and set it to include the MBS frequencies of interest sorted by decreasing order of interest, using the *absoluteFrequencySSB* for serving frequency, if applicable, and the *ARFCN-ValueNR*(s) as included in *SIBx1* (for neighbouring frequencies);
   2> include *mbs-Priority* if the UE prioritises reception of all indicated MBS frequencies above reception of any of the unicast bearers and multicast MRBs;
      NOTE 1: If the UE prioritises MBS reception and unicast data cannot be supported because of congestion on the MBS carrier(s), NG-RAN may for example initiate release of unicast bearers.
   2> if *SIBx* is scheduled by the PCell:
      3> include *mbs-ServiceList* and set it to indicate the set of MBS services of interest sorted by decreasing order of interest determined in accordance with 5.x.4.4.

In operation 750, the UE may perform broadcast MRB release to stop MBS broadcast reception. Alternatively, the broadcast MRB release may be performed in the following cases.

Upon stop of the MBS session, upon leaving the cell broadcasting the MBS service UE is interested in, upon losing interest in the MBS service, when capability limitations start inhibiting reception of the concerned service.

According to an embodiment, the procedure of the broadcast MRB release may be described in Rel-17 TS 38.331 as follows. However, according to various embodiments of the disclosure, below information or operation is merely provided as an example, and the disclosure is not limited thereto, and the information or operation may include only a part of the contents below, or random information or operation may be further included.

### 5.X.3.4 Broadcast MRB release

Upon broadcast MRB release for MBS broadcast service, the UE shall:
1> release the PDCP entity, RLC entity as well as the related MAC and physical layer configuration;
1> inform upper layers about the release of the broadcast MRB by indicating the corresponding *tmgi*;
1> if the SDAP entity associated with the corresponding *tmgi* has no associated MRB:
   2> release the SDAP entity, as specified in TS 37.324 [24] clause 5.1.2.

In NR 3GPP Rel-18, the contents (for at least MBS broadcast) that QoE measurement is supported in the idle mode (RRC_IDLE) and the inactive mode (RRC_INACTIVE) for the MBS service may be included in the Rel-18 work item description (WID) as follows.

### Justification

MBS service (i.e., broadcast and multicast) has been specified in LTE and NR. It is a very important service. The NR QoE is enhanced to support for RRC_CONNECTED, RRC_INACTIVE and RRC_IDLE state for MBS service in collaboration with SA4. The mechanism of how to configure and report legacy QoE and RAN visible QoE measurements, and how to align the QoE with radio related measurements should be specified in Rel-18.

### Objective

Support for new service type, such as AR, MR, MBS and other new service type defined or to be supported by SA4. Support RAN-visible parameters for the additional service types, and the existing service if needed, and the coordination with SA4 is needed[RAN3, RAN2].

Specify the new service and the existing service defined or to be supported by SA4, combined with high mobility scenarios, e.g., High Speed Trains.

Specify for QoE measurement configuration and collection in RRC_INACTIVE and RRC_IDLE states for MBS, at least for broadcast service. [RAN3, RAN2]
Specify the mechanism to support the alignment of the existing radio related measurement and QoE reporting.

In NR Rel-17, QoE measurement (including RVQoE measurement) may be defined for the connected-mode (RRC_CONNECTED) UE. However, as in the above-described Rel-18 WID, in Rel-18, for at least MBS broadcast service, QoE measurement (including RVQoE measurement) not only in the connected-mode or the idle mode (RRC_IDLE) and the inactive mode (RRC_INACTIVE) may be supported. The disclosure includes several embodiments for supporting RAN visible QoE in the idle mode (RRC_IDLE) and the inactive mode (RRC_INACTIVE). In various embodiments of the disclosure described below, the QoE measurement/configuration/reporting may include or mean RVQoE measurement/configuration/reporting, respectively. In addition, similarly, the QoE measurement/configuration/reporting may include or mean QoE measurement/configuration/reporting.

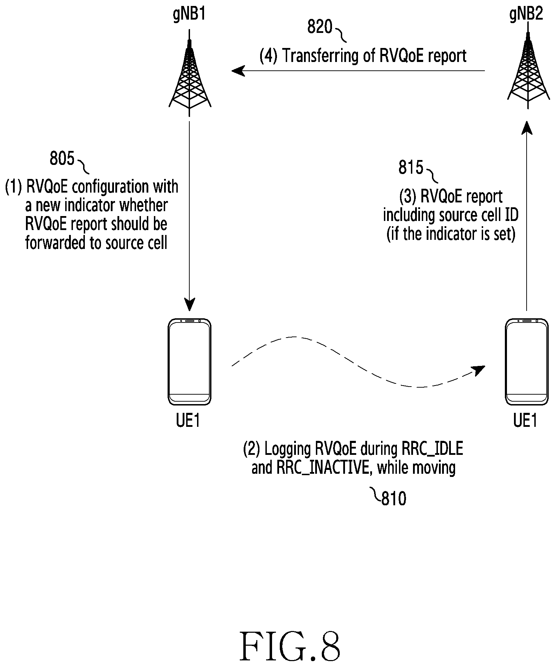

FIG. 8 illustrates an example of an operation for QoE measurement reporting of a UE in an inactive or idle mode according to embodiments of the disclosure. However, according to various embodiments of the disclosure, below information or operation is merely provided as an example, and the disclosure is not limited thereto, and the information or operation may include only a part of the contents below, or random information or operation may be further included.

In operation 805, the base station (e.g., gNB1) may transmit, to the UE (e.g., UE1), configuration information for QoE measurement and/or configuration information for RAN visible QoE measurement in the idle mode (RRC_IDLE) and the inactive mode (RRC_INACTIVE). In this case, the UE may be in the connected mode. The configuration information transmitted by the base station (gNB1) may include information for transferring, by a base station (e.g., gNB2) receiving an RVQoE measurement result report of the UE, the RVQoE measurement result report to a specific base station or a cell. For example, the base station (gNB2) may transfer the RVQoE measurement result report of the UE to the base station (gNB1) having configured the configuration information. The RVQoE measurement result report may be information expected to be measured by the base station (gNB1) having configured the RVQoE, and this may be because it is useful for radio resource management optimization of the base station (gNB1). The RVQoE measurement result report is configuration information to be transferred to a specific base station or cell, and a part or all of the information below may be included.
1) Indicator indicating whether RVQoE measurement result is transferred (information 1-1)
2) ID of specific base station or cell to which RvQoE measurement result needs to be transferred (information 1-2): One of the following IEs may be used to transfer the RVQoE measurement result.
   - CGI-Info-Logging
   - RAN-NotificationAreaInfo
   - RAN-AreaConfig
   - PLMN-IdentityInfo
   - AreaConfiguration
   - ValidityArea

To indicate information 1-2, the above-described IE list, some parameters in the IE, or a list of some parameters of the IE may be indicated. For example, CGI-Info-Logging corresponding to the base station (gNB1) may be included. Alternatively, a physical cell ID (PCI) and a list of PCIs may be indicated.

### CGI-Info-Logging

The IE *CGI-Info-Logging* indicates the NR Cell Global Identifier (NCGI) for logging purposes (e.g. RLF report), the globally unique identity, and the TAC information of a cell in NR.

### CGI-Info-Logging information element

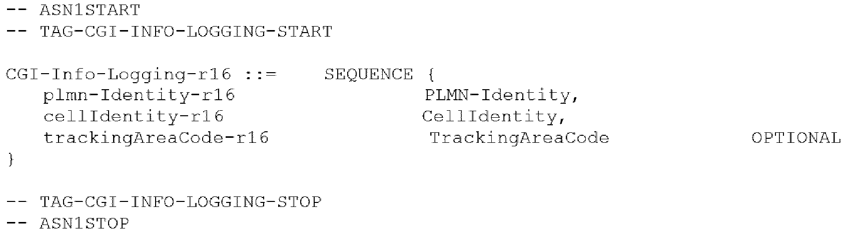

| ***CGI-Info-Logging* field descriptions** |
|---|
| ***cellIdentity*** |
| Unambiguously identify a cell within the context of the PLMN. It belongs the first *PLMN-IdentityInfo* IE of *PLMN-IdentityInfoList* in *SIB1.* |
| ***plmn-Identity*** |
| Identifies the PLMN of the cell for the reported *cellIdentity*: the first PLMN entry of *plmn-IdentityList* (in SIB1) in the instance of *PLMN-IdentityInfoList* that contained the reported *cellIdentity.* |
| ***trackingAreaCode*** |
| Indicates Tracking Area Code to which the cell indicated by cellidentity field belongs. |

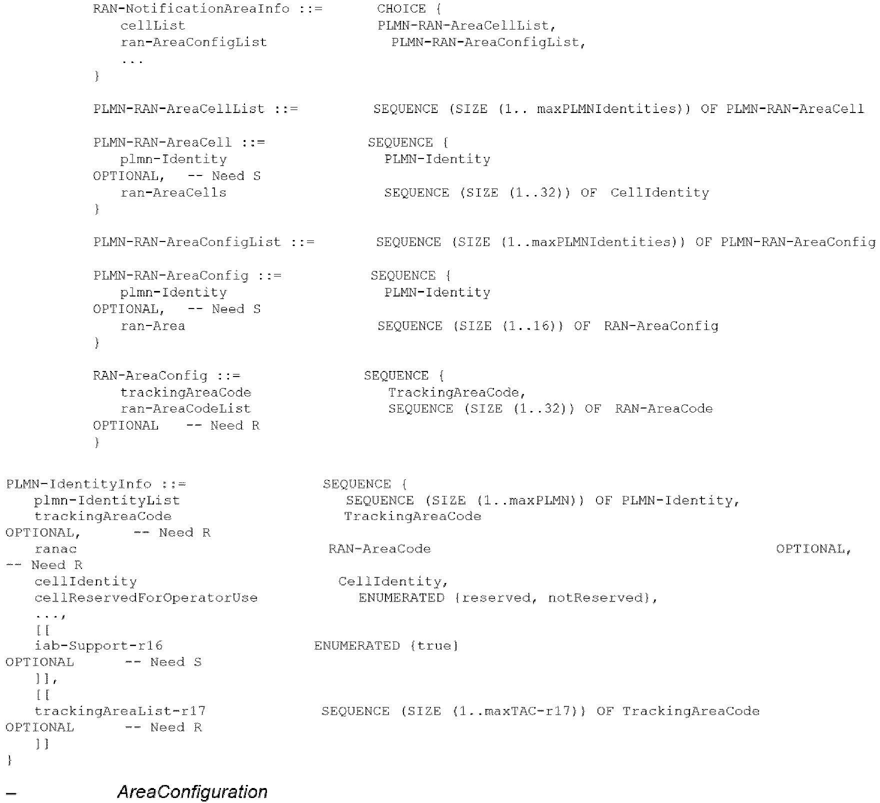

The *AreaConfiguration* indicates area for which UE is requested to perform measurement logging. If not configured, measurement logging is not restricted to specific cells or tracking areas but applies as long as the RPLMN is contained in *plmn-IdentityList* stored in *VarLogMeasReport.*

### AreaConfiguration information element

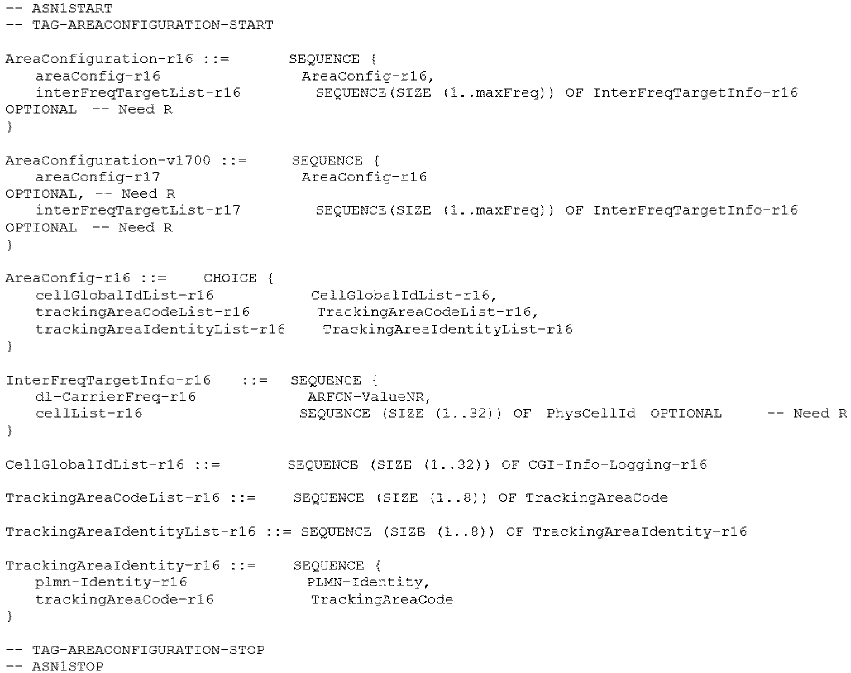

| ***AreaConfiguration* field descriptions** |
|---|
| ***InterFreqTargetInfo*** |
| If configured, it indicates the neighbouring frequency and cells for which UE is requested to perform measurement logging. It can include sync raster or non-sync raster frequencies. |

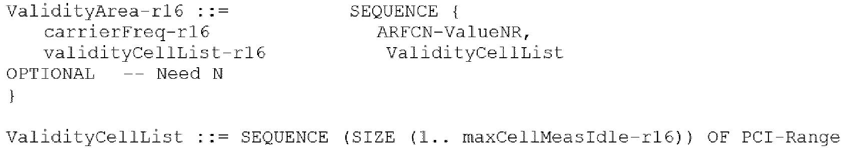

In operation 810, the UE may transition to the inactive or idle mode, or in the connected mode, may perform QoE measurement according to the (RV)QoE configuration information received from the base station (gNB1) and store a result of the measurement. The UE may perform the above-described operation while moving.

In operation 815, the UE may establish an RRC connection with a new base station (e.g., gNB2). Alternatively, the UE may be in a connected mode. The UE may report, to the base station (gNB2), a result measured in the inactive or idle mode (or also including the connected mode). If the above-described information 1-1 or information 1-2 is configured in operation 805, the UE may transfer information indicating a part of all of the corresponding information to the base station (gNB2). When information 1-1 or information 1-2 is not configured, the UE may transmit the RVQoE report to the base station (gNB2) without the above-described information.

In operation 820, when the UE indicates a part of all of the above-described information 1-1 and information 1-2 to the base station (gNB2), the base station (gNB2) may transfer, based on the received information, the RVQoE report to a specific base station or cell. In addition, the base station (gNB2) may also utilize the received RVQoE report. When the UE does not indicate a part or all of the above-described information 1-1 and information 1-2 to the base station (gNB2), the base station (gNB2) may utilize by itself without transferring the received RVQoE report to another base station. Alternatively, the base station (gNB2) may not receive the above-described information 1-1 or information 1-2 from the UE, and receive the same from the base station (gNB1). For example, when the UE in the inactive mode resumes RRC connection, the base station (gNB2) may retrieve UE context from the base station (gNB1).

According to an embodiment, in operations 805 and 8015, the base station (gNB2) may always transfer the RVQoE measurement report to the base station (gNB1) (the base station having configured the RVQoE), without the above-described information 1-1 or information 1-2.

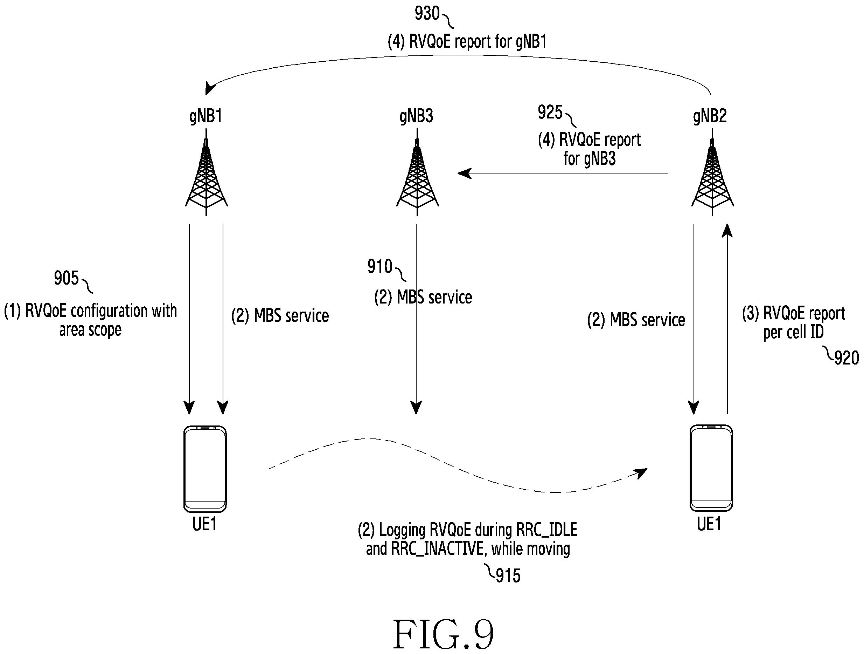

FIG. 9 illustrates an example of an operation for QoE measurement reporting to a base station providing a service of a UE in an inactive or idle mode according to embodiments of the disclosure. However, according to various embodiments of the disclosure, below information or operation is merely provided as an example, and the disclosure is not limited thereto, and the information or operation may include only a part of the contents below, or random information or operation may be further included.

Referring to FIG. 9, according to various embodiments of the disclosure, the UE in the inactive or idle mode may perform QoE measurement for each base station or cell from which a service (e.g., MBS) is received, and may transfer a measurement result report to each base station.

In operation 905, the base station (e.g., gNB1) may transmit, to the UE (e.g., UE1), configuration information for QoE measurement and/or configuration for RAN visible QoE measurement in the idle mode (RRC_IDLE) and inactive mode (RRC_INACTIVE). In this case, the UE may be in the connected mode. The configuration information transmitted by the base station (gNB1) may include information on an area in which the UE performs RVQoE measurement. In relation to the information on the area in which the UE performs RVQoE measurement, at least one of the following IEs may be used.
- CGI-Info-Logging
- RAN-NotificationAreaInfo
- RAN-AreaConfig
- PLMN-IdentityInfo
- AreaConfiguration
- ValidityArea

In relation to the information on the area in which the UE performs RVQoE measurement, the above-described IE list, some parameters in the IE, or a list of some parameters of the IE may be included. For example, a CGI-Info-Logging list corresponding to each base station (gNB1, gNB2, or gNB3) may be included. Alternatively, a physical cell ID (PCI) or a list of PCIs may be indicated.

In operation 910, the UE may transition to the inactive or idle mode, or in the connected mode, may receive the MBS service.

In operation 915, the UE having received the service (e.g., MBS) may perform, based on (RV)QoE configuration information received from the base station (gNB1), QoE measurement and store a result of the measurement. The UE may perform the above-described operation while moving. As the UE moves, a base station or cell providing the service may be changed. For example, the UE may first receive the service from the base station (gNB1), then become far away from the base station (gNB1), receive the service while camping on a base station (gNB3) (in the inactive or idle mode) or while being RRC-connected, and lastly, may receive the service while camping on the base station (gNB2) (in the inactive or idle mode) or while being RRC-connected. The UE may perform QoE measurement according to the area information configured in operation 905. For example, the UE may perform the QoE measurement in the configured area and store a result of the measurement. The UE may not perform the QoE measurement out of the configured area. The UE may store the QoE measurement result for each base station or cell providing the service.

In operation 920, the UE may establish an RRC connection with one base station (e.g., gNB2). Alternatively, the UE may be already in the connected mode. The UE may report the stored QoE measurement result to the base station (gNB2), and in this case, may distinguish each base station or cell (e.g., gNB1, gNB3, or gNB2) having previously provided the service and report the measurement result thereto. In this case, to indicate each base station or cell, at least one of the following IEs or some of the internal parameters may be used.
- CGI-Info-Logging
- RAN-NotificationAreaInfo
- RAN-AreaConfig
- PLMN-IdentityInfo
- AreaConfiguration
- ValidityArea

The (RV)QoE measurement result may be included in each above-described IE or parameter, and the UE may report multiple (RV)QoE measurement results to the base station (gNB2). For example, at least one of a QoE result measured after being serviced from the base station (gNB1), a QoE result measured after being serviced from the base station (gNB3), a QoE result measured after being serviced from the base station (gNB2) may be divided and included.

In operation 925, the base station (gNB2) may transfer, to each corresponding base station, the QoE measurement report distinguished for each base station or cell and received. The base station (gNB2) may transfer, to the base station (gNB3), the QoE report measured in the base station (gNB3) or a cell corresponding to the base station (gNB3). The base station (gNB2) may use, by the base station (gNB2) itself, the QoE report measured in the base station (gNB2) or a cell corresponding to the base station (gNB2).

In operation 930, the base station (gNB2) may transfer, to the base station (gNB1), a QoE report measured in the base station (gNB1) or a cell corresponding to the base station (gNB1).

Through the above-described process, each base station may identify the quality of the service provided by the base station itself, and use the same for network optimization. For example, when the base station (gNB1) receives a report that the quality of the MBS broadcast service provided by the base station (gNB1) itself, the base station (gNB1) may allocate many radio resources that are more robust, so as to provide a better quality of service to UEs. On the other hands, when the base station (gNB3) receives a report that the quality of the MBS broadcast service provided by the base station (gNB3) is sufficiently good, the base station (gNB3) may reduce the radio resources allocated to the MBS service to reduce the energy consumption of the UE, and provide the MBS service.

According to an embodiment, the base station (gNB2) may transfer the (RV)QoE measurement report to an object or a function involved in the MBS service. For example, the base station (gNB2) may transfer the (RV)QoE measurement report to a multicast broadcast user plane function (MB-UPF), a multicast broadcast session management function (MB-SMF), a multicast broadcast service transport function (MBSTF), a multicast broadcast service function (MBSF), etc.

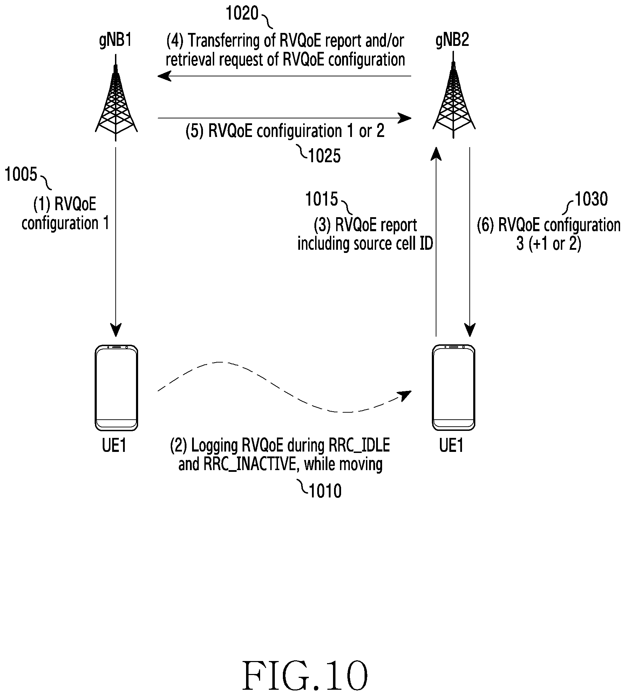

FIG. 10 illustrates an example of an operation of generating configuration information for QoE measurement reporting for a UE in an inactive or idle mode according to embodiments of the disclosure. However, according to various embodiments of the disclosure, below information or operation is merely provided as an example, and the disclosure is not limited thereto, and the information or operation may include only a part of the contents below, or random information or operation may be further included.

In operation 1005, a base station (e.g., gNB1) may transmit, to a UE (e.g., UE1), configuration information of QoE measurement and/or configuration information (e.g., RVQoE Configuration 1) for RAN visible QoE measurement in an idle mode (RRC_IDLE) and an inactive mode (RRC_INACTIVE). In this case, the UE may be in a connected mode.

In operation 1010, the UE may transition to an inactive mode or an idle mode. Alternatively, the UE may be in the connected mode. The UE may perform, based on (RV)QoE configuration information received from the base station (gNB1) while receiving a service (e.g., MBS), QoE measurement and store a result of the measurement. The UE may perform the above-described operation while moving.

In operation 1015, the UE may establish an RRC connection with the base station (gNB2). Alternatively, the UE may be already in the connected mode. The UE may report the stored RVQoE measurement result to the base station (gNB2). The UE may report, to the base station (gNB2), an ID of a base station or a cell (e.g., gNB1) having configured the RVQoE configuration. In this case, for the UE to indicate the base station or the cell having configured the RVQoE configuration (RVQoE Configuration 1), at least one of the following IEs or some of the internal parameters thereof may be used.
- CGI-Info-Logging
- RAN-NotificationAreaInfo
- RAN-AreaConfig
- PLMN-IdentityInfo
- AreaConfiguration
- ValidityArea

In operation 1020, the base station (gNB2) may transfer the RVQoE measurement result received from the UE to the base station (gNB1). In addition, the base station (gNB2) may request, from the base station (gNB1), the RVQoE configuration information (RVQoE Configuration 1) having been allocated to the UE (UE1).

In operation 1025, the base station (gNB1) may transmit RVQoE Configuration 1 to the base station (gNB2). Alternatively, the base station (gNB1) may transmit RVQoE Configuration 2 to the base station (gNB2) to configure new configuration information (RVQoE Configuration 2) for the UE. For example, the base station (gNB1) may generate, based on the received RVQoE measurement result or/and RVQoE Configuration 1, RVQoE Configuration 2. Compared to RVQoE Configuration 1 that the UE has, RVQoE Configuration 2 may include some new configurations. In addition, RVQoE Configuration 2 may be a configuration for maintaining a part or all of RVQoE Configuration 1 that the UE has. In addition, RVQoE Configuration 2 may be used to release a part or all of the RVQoE Configuration 1 that the UE has.

In operation 1030, the base station (gNB2) may configure, for the UE, RVQoE configuration information (RVQoE Configuration 3) that the base station (gNB2) wants. RVQoE Configuration 3 may be configuration information generated based on RVQoE Configuration 1 or 2. For example, the base station (gNB2) may generate RVQoE Configuration 3 by adding/releasing/modifying, based on RVQoE Configuration 1 or 2, configuration information that the base station (gNB2) wants. The base station (gNB2) may configure, for the UE, RVQoE Configuration 3 rather than RVQoE Configuration 1 or 2. Alternatively, the base station (gNB2) may configure, for the UE, RVQoE Configuration 3 together with RVQoE Configuration 1 or 2.

According to an embodiment, in a case of the UE in the inactive mode, the base station (gNB2) may acquire RVQoE configuration 1 or 2 by retrieving UE context from the base station (gNB1).

According to an embodiment, instead of receiving, by the base station (gNB2), RVQoE configuration information from the base station (gNB1), the UE may report, to the base station (gNB2), a part or all of the RVQoE configuration (RVQoE Configuration 1) configured for the UE itself. According to an embodiment, the base station (gNB2) may request the RVQoE configuration information from the UE.

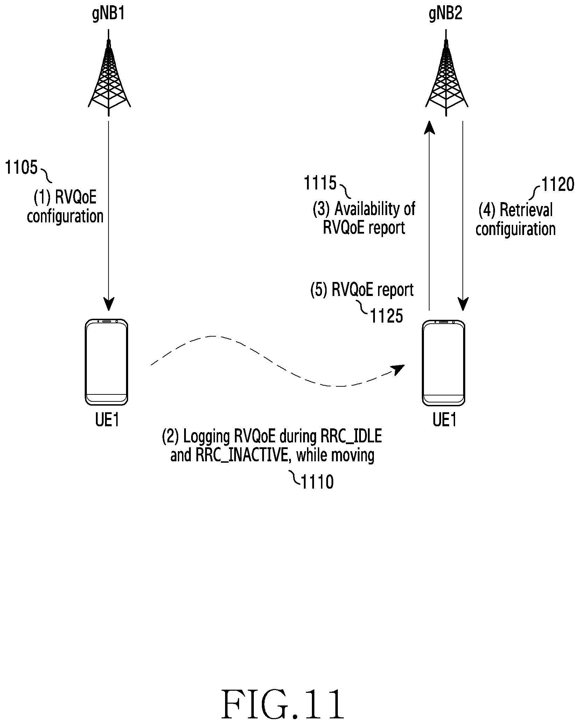

FIG. 11 illustrates an example of an operation of configuring configuration information for QoE measurement reporting for a UE in an inactive or idle mode according to embodiments of the disclosure. However, according to various embodiments of the disclosure, below information or operation is merely provided as an example, and the disclosure is not limited thereto, and the information or operation may include only a part of the contents below, or random information or operation may be further included.

In operation 1105, a base station (e.g., gNB1) may transmit, to a UE (e.g., UE1), configuration information for QoE measurement and/or configuration for RAN visible QoE measurement (e.g., RVQoE Configuration 1) in an idle mode (RRC_IDLE) and an inactive mode (RRC _INACTIVE). In this case, the UE may be in a connected mode.

In operation 1110, the UE may transition to an inactive mode or an idle mode. Alternatively, the UE may be in the connected mode. The UE may perform, based on (RV)QoE configuration information received from the base station (gNB1) while receiving a service (e.g., MBS), QoE measurement and store a result of the measurement. The UE may perform the above-described operation while moving.

In operation 1115, the UE may establish an RRC connection with the base station (gNB2). Alternatively, the UE may be already in the connected mode. To this end, the UE may transmit an RRCSetupRequest message or an RRCResumeRequest message to the base station (gNB2). According to an embodiment, the reason for the RRC connection request of the UE may be for reporting of the RVQoE measurement result. For a value of establishment or resume cause of the RRC connection, "availability or the report of the RVQoE measurement result" may be defined as a new value. The UE may transmit the RRCSetupRequest message or the RRCResumeRequest message by configuring the above-described value. Alternatively, the UE may report the availability of the RVQoE measurement result to the base station (gNB2) through the RRCSetupComplete message or the RRCResumeComplete message. Through the above-described value, the base station may identify the fact that the UE stores the RVQoE measurement result, the fact that the UE may report the RVQoE measurement result, or the UE requests retrieval.

In operation 1120, the base station (gNB2) may transmit configuration information for retrieval of the RVQoE measurement result of the UE to the UE. The configuration information transmitted by the base station (gNB2) may include some or all of the following parameters.
1) An indicator allowing reporting of the RVQoE measurement result: When the corresponding indicator is configured to be true or present, the UE may transmit the RVQoE measurement result report. When the corresponding indicator is configured to be false or absent, the UE may not transmit the RVQoE measurement result report.
2) Filtering information of the report of the RVQoE measurement result: When the corresponding information is present, the UE may transmit only a measurement result satisfying the filtering information to the base station. When the corresponding indicator is absent, the UE may transmit all the stored measurement result to the base station. It may not be useful for the base station (gNB2) to receive all the results of the RVQoE measurement configured by the base station (gNB1) from multiple UEs, and excessive use of radio resources may burden the network, and thus it may be efficient for network management to receive only some of the measurement results stored in the UE through the configuration of the above-described filtering information.
2-1) As one piece of the above-described filtering information, the base station may indicate a QoE indicator to be reported. The UE may not report an unindicated QoE indicator even though there is a stored measurement result.
2-2) As one piece of the above-described filtering information, the base station may indicate a sampling period of QoE information. Even though the UE has (more) QoE measurement results stored at a shorter period than the indicated period, the UE may report only a result of the corresponding period to the base station. To this end, the UE may store a measurement time point or a logging time point together with each QoE measurement result.
2-3) As one piece of the above-described filtering information, the base station may indicate a QoE measurement time period or time point. The UE may not report, to the base station, a QoE result measured out of the period or time point. To this end, the UE may store the measurement time point or logging time point together with each QoE measurement result.
2-4) As one piece of the above-described filtering information, the base station may indicate a QoE result threshold. The UE may report, to the base station, only a QoE measurement result worse than the corresponding threshold, and may not report, to the base station, a measurement result better than the corresponding threshold.
2-5) As one piece of the above-described filtering information, the base station may indicate QoE measurement area information. The UE may not report, to the base station, a result measured out of the corresponding area and stored. To this end, the UE may separately store measurement results for each area (e.g., a base station or cell, a tracking area code (TAC), and a RAN notification area). To indicate the area, at least one of the following IEs, some of the internal parameters thereof, or a list of the same may be used.
   - CGI-Info-Logging
   - RAN-NotificationAreaInfo
   - RAN-AreaConfig
   - PLMN-IdentityInfo
   - AreaConfiguration
   - ValidityArea
2-6) As one piece of the above-described filtering information, the base station may indicate a maximum number of reportable QoE measurement values. The UE may not report the corresponding number or more QoE measurement values. The UE may first include the up to date QoE measurement value in the report.
2-7) As one piece of the above-described filtering information, the base station may indicate a specific event. The UE may report, to the base station, only a QoE result measured as the corresponding event. The UE may not report, to the base station, a QoE result measured as an unindicated event.
2-8) As one piece of the above-described filtering information, the base station may indicate a specific DRB, a QoS flow ID, or a PDU-session ID. The UE may not report, to the base station, a QoE result associated with the unindicated DRB, QoS flow ID, or PDU-session ID.

According to an embodiment, the above-described filtering configuration information may be used to filter partial information when the UE reports the RVQoE measurement result already stored through the measurement. Alternatively, the above-described filtering configuration information may be included in the RVQoE configuration 1105 and indicated to the UE, and the UE may not perform measurement out of the filtering configuration, or may not store the measurement result even though the measurement is performed.

According to an embodiment, the above-described configuration information may be indicated for each RVQoE measurement report parameter.

According to an embodiment, the UE may disregard the QoE measurement result reported by the above-described filtering configuration. This is because the filtering information is information already reported to the network, and is thus not necessary information any longer. In addition, the UE may disregard the QoE measurement result not reported by the above-described filtering configuration. This is because the filtering information is information not requested by the base station, and thus keep storing the filtering information by the UE may cause the waste of memory of the UE. Alternatively, the UE may keep storing the QoE measurement result not reported by the above-described filtering configuration, and report the same later. For example, the base station may transmit a new retrieval request or retrieval filtering configuration information, and report a measurement result satisfying the same. Alternatively, a time interval of storing the QoE result measured by the UE may be defined to have a fixed value in the standard. Alternatively, the time interval of storing the QoE result measured by the UE may be configured (e.g., operation 1105 or operation 1120) by the base station. To this end, a timer for QoE result storage may be defined. While the above-described timer is running, the UE may store the QoE measurement result connected to the corresponding timer. When the above-described timer expires, the UE may not store the QoE measurement result connected to the corresponding timer and may disregard the same. The length of the above-described timer may be defined as a fixed value in the standard. Alternatively, the base station may configure (e.g., operation 1105 or operation 1120) the length of the above-described timer. The length of the above-described timer may be defined or configured differently for each service type, QoE configuration ID, or QoE measurement result indicator (parameter) of the QoE measurement result.

In operation 1125, the UE (UE1) may report the QoE measurement result to the base station (gNB2). In this case, according to the configuration information received in operation 1120, the UE may report the QoE measurement result.

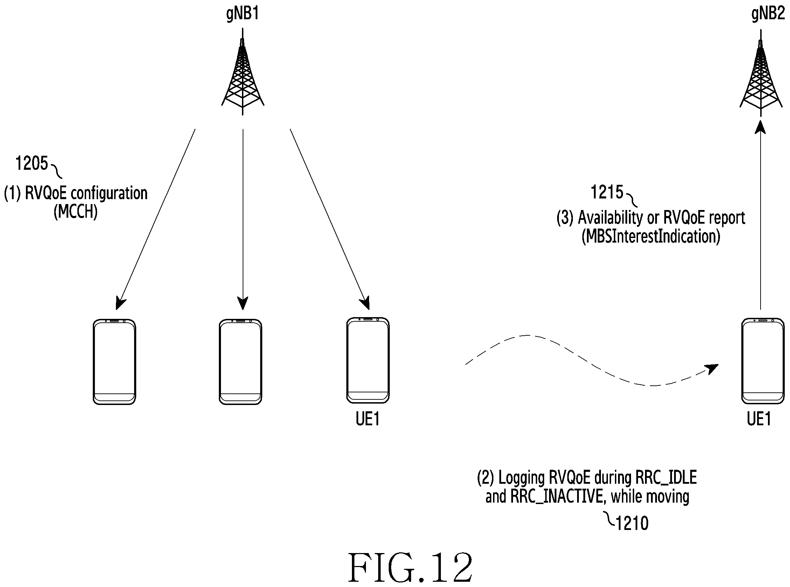

FIG. 12 illustrates an example of an operation of configuring, for a UE in an inactive or idle mode, configuration information for QoE measurement reporting through an MCCH according to embodiments of the disclosure. However, according to various embodiments of the disclosure, below information or operation is merely provided as an example, and the disclosure is not limited thereto, and the information or operation may include only a part of the contents below, or random information or operation may be further included.

In operation 1205, a base station (e.g., gNB1) may transmit configure, for a UE (e.g., UE1), configuration information for QoE measurement and/or configuration information (e.g., RVQoE Configuration 1) for RAN visible QoE measurement in an idle mode (RRC_IDLE) and an inactive mode (RRC_INACTIVE). In this case, the UE may be in a connected mode. Alternatively, the UE may receive QoE configuration information through an MBS control channel (MCCH) in the inactive or idle mode.

In operation 1210, the UE may perform RVQoE measurement while transition to or maintaining the inactive or idle mode. Alternatively, the UE may perform the RVQoE measurement in the connected mode.

In operation 1215, the UE may report the RVQoE measurement result through MBSInterestIndication, or may inform the base station of the availability of the RVQoE measurement result. To this end, the UE may transition to or maintain the connected mode. When the UE reports the availability of the RVQoE measurement result, the UE may report the RVQoE measurement result through the procedures of operations 1115, 1120, and 1125.

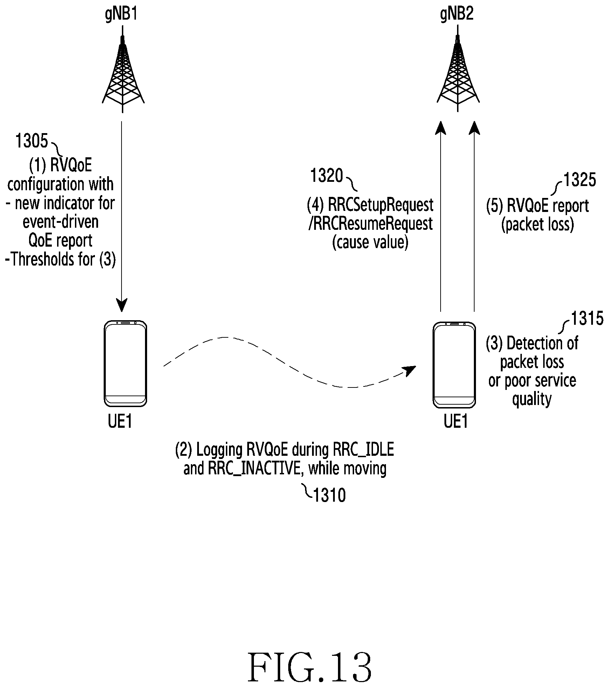

FIG. 13 illustrates an example of an operation of reporting, by a UE in an inactive or idle mode, packet loss for QoE measurement reporting according to embodiments of the disclosure. However, according to various embodiments of the disclosure, below information or operation is merely provided as an example, and the disclosure is not limited thereto, and the information or operation may include only a part of the contents below, or random information or operation may be further included.

An MBS broadcast may be a best-effort service, and thus the base station may often experience packet loss while receiving a service of the UE, but the UE may not be able to identify packet loss for each UE or whether how poor the QoE is in an application layer due to the packet loss. According to various embodiments of the disclosure, a method for solving the above-described problem is described.

In operation 1305, a base station (e.g., gNB1) may transmit, to a UE (e.g., UE1), configuration information for QoE measurement and/or configuration information for RAN visible QoE measurement (e.g., RVQoE Configuration 1) in an idle mode (RRC_IDLE) or inactive (RRC_INACTIVE). In this case, the UE may be in a connected mode. The base station may configure an indicator indicating an event-driven QoE measurement report in the above-described configuration information. In addition, the event detection-related configuration (e.g., described as N or M in the description of operation 1315) may be included in the above-described configuration information.

In operation 1310, the UE may transition to the inactive mode or the idle mode. Alternatively, the UE may be in the connected mode. The UE may perform based on (RV)QoE configuration information received from the base station (gNB1) while receiving a service (e.g., MBS), QoE measurement, and store a result of the measurement. The UE may perform the above-described operation while moving.

In operation 1315, when the event detection-related configuration or indicator indicating the event-driven QoE measurement report received from the base station in operation 1305 is true or present, the UE may establish an RRC connection with a base station (e.g., a base station providing a service (e.g., MBS)) to inform the base station of the detection of the event. According to an embodiment, a case where the specific event occurs may be a case where the UE detects that the degree of occurring packet loss (e.g., packet loss in a packet data convergence protocol (PDCP) layer or application layer) is equal to or greater than a predetermined reference or the degree of the reduction in the performance of the QoE is equal to or greater than a predetermined reference due to the packet loss. According to an embodiment, the case where the UE detects that the degree of the packet loss is equal to or greater than a predetermined reference may be a case where packet loss is detected N or more times consecutively. According to an embodiment, the case where the degree of the reduction in the performance of the QoE is equal to or greater than a predetermined reference may be a case where the reduction of throughput of the MBS service is M% or higher. Here, the event detection-related configuration, such as N or M, may be configured for the UE by the base station in operation 1305, or may be a fixed value defined in the standard.

In operation 1320, an establishment or resume cause value of the above-described RRC connection may be newly defined. The UE may configure the above-described value, and transmit RRCSetupRequest and RRCResumeRequest to the base station, so as to report the detection of the event.

In operation 1325, the UE may report a QoE indicator related to the occurrence of the event to the base station. For example, the number of times or the probability of (consecutive) packet loss in the PDCP layer or the application layer. Alternatively, the UE may report the reduced QoE indicator (e.g., throughput or delay) detected in the application layer due to the packet loss.

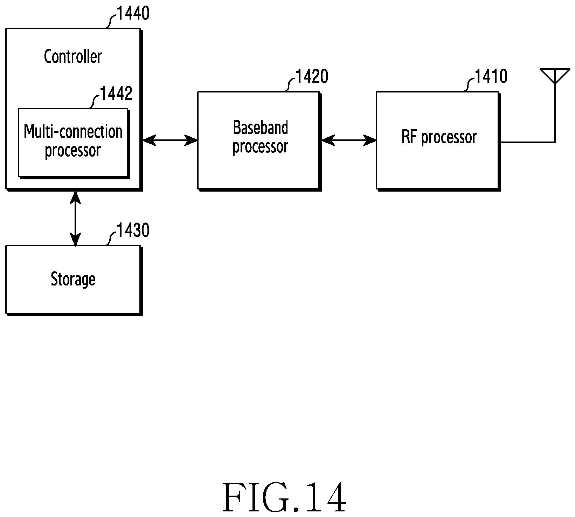

FIG. 14 illustrates a functional configuration of a UE according to embodiments of the disclosure.

Referring to FIG. 14, the UE may include a radio frequency (RF) processor 1410, a baseband processor 1420, a storage 1430, and a controller 1440.

The RF processor 1410 may perform a function for transmitting or receiving a signal through a radio channel, such as signal band conversion and amplification. The RF processor 1410 may perform up-conversion of a baseband signal provided from the baseband processor 1420 into an RF-band signal to transmit the converted signal to an antenna, and may perform down-conversion of the RF-band signal received through the antenna into a baseband signal. For example, the RF processor 1410 may include a transmission filter, a reception filter, an amplifier, a mixer, an oscillator, a digital-to-analog converter (DAC), an analog-to-digital converter (ADC), and the like. In FIG. 14, only one antenna is illustrated, but the UE may include multiple antennas. In addition, the RF processor 1410 may include multiple RF chains. Moreover, the RF processor 1410 may perform beamforming. For beamforming, the RF processor 1410 may adjust phases and sizes of signals transmitted or received through the plurality of antennas or antenna elements. In addition, the RF processor may perform multiple-input and multiple-output (MIMO), and may receive several layers during performing of the MIMO operation.

The baseband processor 1420 may perform a conversion function between a baseband signal and a bit string in accordance with the physical layer specification of the system. For example, during data transmission, the baseband processor 1420 may generate complex symbols by encoding and modulating a transmitted bit string. In addition, during data reception, the baseband processor 1420 restores a received bit string by demodulating and decoding the baseband signal provided from the RF processor 1410. For example, when following an OFDM method, during data transmission, the baseband processor 1420 may generate complex symbols by encoding and modulating a transmitted bit string, perform mapping of the complex symbols on subcarriers, and then configure OFDM symbols through the inverse fast Fourier transform (IFFT) operation and cyclic prefix (CP) insertion. In addition, during data reception, the baseband processor 1420 may divide the baseband signal provided from the RF processor 1410 in units of OFDM symbols, restore the signals mapped on the subcarriers through the fast Fourier (FFT) operation, and then restore the received bit string through demodulation and decoding.

The baseband processor 1420 and the RF processor 1410 may transmit and receive the signals as described above. Accordingly, the baseband processor 1420 and the RF processor 1410 may be called a transmitter, a receiver, a transceiver, or a communication unit. Moreover, in order to support different radio access technologies, at least one of the baseband processor 1420 and the RF processor 1410 may include a plurality of communication modules. In addition, in order to process signals of different frequency bands, at least one of the baseband processor 1420 and the RF processor 1410 may include different communication modules. For example, the different radio access technologies may include a wireless RAN (e.g., IEEE 802.11), a cellular network (e.g., LTE), etc. In addition, the different frequency bands may include super high frequency (SHF) (e.g., 2.NRHz or NRhz) band and millimeter wave (mmWave) (e.g., 60 GHz) band.

The storage 1430 may store a basic program for an operation of the UE, application programs, and data of configuration information. Specifically, the storage 1430 may store information related to a second access node performing radio communication by using a second radio access technology. In addition, the storage 1430 may provide stored data in accordance with a request from the controller 1440.

The controller 1440 may control the overall operations of the UE. For example, the controller 1440 may transmit and receive signals through the baseband processor 1420 and the RF processor 1410. In addition, the controller 1440 may record or read data in or from the storage unit 1440. To this end, the controller 1440 may include at least one processor. For example, the controller 1440 may include a communication processor (CP) for controlling communication and an application processor (AP) for controlling an upper layer, such as an application program.

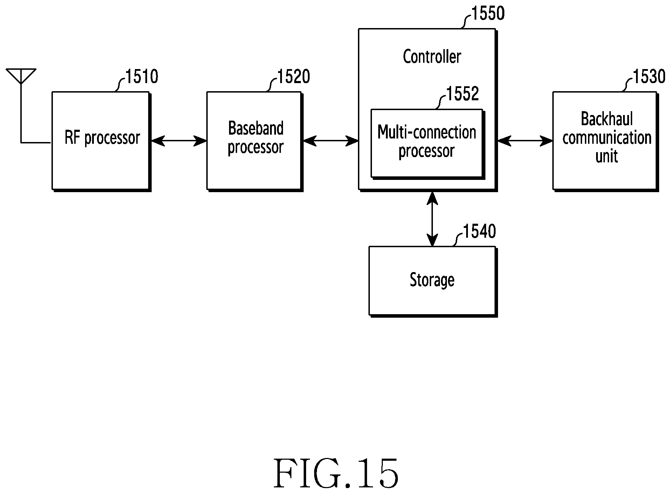

FIG. 15 illustrates a functional configuration of a base station according to embodiments of the disclosure.

Referring to FIG. 15, the base station may include an RF processor 1510, a baseband processor 1520, a backhaul communication unit 1530, a storage 1540, and a controller 1550.

The RF processor 1510 may perform a function for transmitting and receiving a signal through a radio channel, such as signal band conversion and amplification. The RF processor 1510 may perform up-conversion of a baseband signal provided from the baseband processor 1520 into an RF-band signal to transmit the converted signal to an antenna, and may perform down-conversion of the RF-band signal received through the antenna into a baseband signal. For example, the RF processor 1510 may include a transmission filter, a reception filter, an amplifier, a mixer, an oscillator, a DAC, an ADC, and the like. Referring to FIG. 15, although only one antenna is illustrated, the first access node may include a plurality of antennas. In addition, the RF processor 1510 may include a plurality of RF chains. Moreover, the RF processor 1510 may perform beamforming. For the beamforming, the RF processor 1510 may adjust phases and sizes of signals transmitted or received through the plurality of antennas or antenna elements. The RF processor may perform down MIMO operation through transmission of one or more layers.

The baseband processor 1520 may perform conversion between a baseband signal and a bit string in accordance with the physical layer specification of the first radio access technology. For example, during data transmission, the baseband processor 1520 may generate complex symbols by encoding and modulating a transmitted bit string. In addition, during data reception, the baseband processor 1520 may restore a received bit string by demodulating and decoding the baseband signal provided from the RF processor 1510. For example, when following an OFDM method, during data transmission, the baseband processor 1520 may generate complex symbols by encoding and modulating a transmitted bit string, perform mapping of the complex symbols on subcarriers, and then configure OFDM symbols through the IFFT operation and CP insertion. In addition, during data reception, the baseband processor 1520 may divide the baseband signal provided from the RF processor 1510 in units of OFDM symbols, restore the signals mapped on the subcarriers through the FFT operation, and then restore the received bit string through demodulation and decoding. The baseband processor 1520 and the RF processor 1510 may transmit and receive the signals as described above. Accordingly, the baseband processor 1520 and the RF processor 1510 may be called a transmitter, a receiver, a transceiver, or a wireless communication unit.

The backhaul communication unit 1530 may provide an interface for performing communication with other nodes in the network. The backhaul communication unit 1530 may convert a bit string transmitted from a main base station to another node, for example, a primary base station, a core network, etc. into a physical signal, and may convert a physical signal received from another node into a bit string.

The storage 1540 may store a basic program for an operation of the main base station, application programs, and data of setup information. In particular, the storage 1540 may store information on a bearer allocated to the connected UE, the measurement result reported from the connected UE, etc. In addition, the storage 1540 may store information that becomes a basis of determination whether to provide or suspend a multi-connection to the UE. The storage 1540 may provide stored data in accordance with a request from the controller 1550.

The controller 1550 may control the overall operations of a main base station. For example, the controller 1550 may transmit and receive signals through the baseband processor 1520 and the RF processor 1510 or through the backhaul communication unit 1530. In addition, the controller 1550 may record or read data in or from the storage 1540. To this end, the controller 1550 may include at least one processor.

According to various embodiments of the disclosure, a method performed by a UE in a wireless communication system may include receiving, from a first base station, configuration information for quality of experience (QoE) measurement between the UE and the first base station, performing, based on the received configuration information, the QoE measurement between the UE and the first base station in an inactive or idle mode, establishing a radio resource control (RRC) connection with a second base station, and transmitting the received configuration information or information on a result of the QoE measurement to the second base station, wherein the configuration information for the QoE measurement may include information on the first base station receiving the information on the result of the QoE measurement through the second base station.

According to an embodiment, the configuration information for the QoE measurement between the UE and the first base station may include information related to an area for the QoE measurement, and the method may further include receiving a multicast broadcast service (MBS) from the first base station, performing, based on the MBS, the configuration information for the QoE measurement, and the area for the QoE measurement, the QoE measurement between the UE and the first base station, and storing a result of the QoE measurement between the UE and the first base station.

According to an embodiment, the method may further include receiving configuration information for QoE measurement between the UE and the second base station from the second base station, and the configuration information for the QoE measurement between the UE and the second base station may be generated based on the configuration information for the QoE measurement between the UE and the first base station.

According to an embodiment, the establishing of the radio remote control (RRC) connection with the second base station may further include transmitting, to the second base station, an RRC connection request message including an indicator indicating availability of the result of the QoE measurement between the UE and the first base station by the second base station, and receiving, from the second base station, configuration information including at least one of an indicator allowing reporting of the result of the QoE measurement between the UE and the first base station or filtering information for the reporting of result of the QoE measurement, based on the RRC connection request message.

According to an embodiment, the configuration information for the QoE measurement between the UE and the first base station may include an indicator indicating an event-driven QoE measurement report by which a QoE measurement result according to packet loss is reported, and the method may further include detecting, based on the received configuration information, QoE performance reduction or packet loss between the UE and the first base station, and transmitting the detected result to the second base station.

According to various embodiments of the disclosure, a method performed by a second base station in a wireless communication system may include establishing a radio remote control (RRC) connection with a UE, and receiving, from the UE, quality of experience (QoE) result information between the UE and a first base station, measured based on configuration information for QoE measurement between the UE and the first base station in an inactive or idle mode, wherein the configuration information for the QoE measurement may include information on the first base station receiving the measured QoE result information through the second base station.

According to an embodiment, the configuration information for the QoE measurement between the UE and the first base station may include information related to an area for the QoE measurement.

According to an embodiment, the method may include receiving, from the UE, configuration information for quality of experience (QoE) measurement between the UE and the first base station, the configuration information being received from the first base station, and transmitting configuration information for QoE measurement between the UE and the second base station to the UE, wherein the configuration information for the QoE measurement between the UE and the second base station may be generated based on the configuration information for the QoE measurement between the UE and the first base station.

According to an embodiment, the establishing of the radio remote control (RRC) connection with the UE may further include receiving, from the UE, an RRC connection request message including an indicator indicating availability of a result of QoE measurement between the UE and the first base station by the second base station, and transmitting, to the UE, configuration information including at least one of an indicator allowing reporting of the result of the QoE measurement between the UE and the first base station or filtering information for the reporting of result of the QoE measurement, based on the RRC connection request message.

According to an embodiment, the configuration for the QoE measurement between the UE and the first base station may include an indicator indicating an event-driven QoE measurement report by which a QoE measurement result according to packet loss is reported, and the method may further include receiving, from the UE, a result of detecting, based on the received configuration information, QoE performance reduction or packet loss between the UE and the first base station.

According to various embodiments of the disclosure, a UE in a wireless communication system may include at least one transceiver and at least one processor functionally coupled with the at least one transceiver, wherein the at least one processor is configured to receive, from a first base station, configuration information for quality of experience (QoE) measurement between the UE and the first base station, perform, based on the received configuration information, the QoE measurement between the UE and the first base station in an inactive or idle mode, establish a radio resource control (RRC) connection with a second base station, and transmit the received configuration information or information on a result of the QoE measurement to the second base station, and the configuration information for the QoE measurement may include information on the first base station receiving the information on the result of the QoE measurement through the second base station.

According to an embodiment, the configuration information for the QoE measurement between the UE and the first base station may include information related to an area for the QoE measurement, and the at least one processor may be further configured to receive a multicast broadcast service (MBS) from the first base station, perform, based on the MBS, the configuration information for the QoE measurement, and the area for the QoE measurement, the QoE measurement between the UE and the first base station, and store a result of the QoE measurement between the UE and the first base station.

According to an embodiment, the at least one processor may be further configured to receive configuration information for QoE measurement between the UE and the second base station from the second base station, and the configuration information for the QoE measurement between the UE and the second base station may be generated based on the configuration information for the QoE measurement between the UE and the first base station.

According to an embodiment, to establish the radio remote control (RRC) connection with the second base station, the at least one processor may be further configured to transmit, to the second base station, an RRC connection request message including an indicator indicating availability of the result of the QoE measurement between the UE and the first base station by the second base station, and receive, from the second base station, configuration information including at least one of an indicator allowing reporting of the result of the QoE measurement between the UE and the first base station or filtering information for the reporting of result of the QoE measurement, based on the RRC connection request message

According to an embodiment, the configuration information for the QoE measurement between the UE and the first base station may include an indicator indicating an event-driven QoE measurement report by which a QoE measurement result according to packet loss is reported, and the at least one processor may be further configured to detect, based on the received configuration information, QoE performance reduction or packet loss between the UE and the first base station, and transmit the detected result to the second base station.

According to various embodiments of the disclosure, a second base station in a wireless communication system may include at least one transceiver and at least one processor functionally coupled with the at least one transceiver, wherein the at least one processor may be configured to establish a radio remote control (RRC) connection with a UE, and receive, from the UE, quality of experience (QoE) result information between the UE and a first base station, measured based on configuration information for QoE measurement between the UE and the first base station in an inactive or idle mode, and the configuration information for the QoE measurement may include information on the first base station receiving the measured QoE result information through the second base station.

According to an embodiment, the configuration information for the QoE measurement between the UE and the first base station may include information related to an area for the QoE measurement.

According to an embodiment, the at least one processor may be configured to receive, from the UE, configuration information for quality of experience (QoE) measurement between the UE and the first base station, the configuration information being received from the first base station, and transmit configuration information for QoE measurement between the UE and the second base station to the UE, and the configuration information for the QoE measurement between the UE and the second base station may be generated based on the configuration information for the QoE measurement between the UE and the first base station.

According to an embodiment, to establish the radio remote control (RRC) connection with the UE, the at least one processor may be further configured to receive, from the UE, an RRC connection request message including an indicator indicating availability of a result of QoE measurement between the UE and the first base station by the second base station, and transmit, to the UE, configuration information including at least one of an indicator allowing reporting of the result of the QoE measurement between the UE and the first base station or filtering information for the reporting of result of the QoE measurement, based on the RRC connection request message.

According to an embodiment, the configuration information for the QoE measurement between the UE and the first base station may include an indicator indicating an event-driven QoE measurement report by which a QoE measurement result according to packet loss is reported, and the at least one processor may be further configured to receive, from the UE, a result of detecting, based on the received configuration information, QoE performance reduction or packet loss between the UE and the first base station.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A user equipment (UE) in a wireless communication system, the UE comprising:
a transceiver; and
a controller coupled with the transceiver,
wherein the controller is configured to:
receive, from a first base station, configuration information for radio access network (RAN) visible quality of experience (RVQoE) measurement;
perform the RVQoE measurement in an inactive or idle mode;
establish a radio resource control (RRC) connection with a second base station; and
transmit, to the second base station, information on a result of the RVQoE measurement.

2. The UE of claim 1, wherein the configuration information for the RVQoE measurement includes information on a cell identifier related to the first base station.

3. The UE of claim 1, wherein, in order to perform the RVQoE measurement in the inactive or idle mode, the controller is configured to:
receive, from the first base station, a broadcast signal in an inactive or idle mode; and
perform the RVQoE measurement, based the broadcast signal.

4. The UE of claim 1, wherein the configuration information for the RVQoE measurement includes information related to an area for the RVQoE measurement.

5. The UE of claim 1, wherein the controller is further configured to:
receive, from a third base station, a broadcast signal in an inactive or idle mode; and
perform the RVQoE measurement, based on the broadcast signal, and
wherein the information on the result of the RVQoE measurement includes at least one of a result of RVQoE measurement between the UE and the first base station or a result of RVQoE measurement between the UE and the third base station.

6. The UE of claim 1, wherein the controller is further configured to:
transmit, to the second base station, information related to availability of the result of the RVQoE measurement; and
receive, from the second base station, information for configuring retrieval of RVQoE.

7. The UE of claim 1, wherein the configuration information for the RVQoE measurement includes an indicator related to detection of packet loss, and
wherein the information on the result of the RVQoE measurement is transmitted in case that the packet loss is detected based on the indicator.

8. The UE of claim 1, wherein the configuration information for the RVQoE measurement is received through at least one of an RRC signal or a broadcast signal.

9. A method performed by a user equipment (UE) in a wireless communication system, the method comprising:
receiving, from a first base station, configuration information for radio access network (RAN) visible quality of experience (RVQoE) measurement;
performing the RVQoE measurement in an inactive or idle mode;
establishing a radio resource control (RRC) connection with a second base station; and
transmitting, to the second base station, information on a result of the RVQoE measurement.

10. The method of claim 9, wherein the configuration information for the RVQoE measurement includes information on a cell identifier related to the first base station.

11. The method of claim 9, wherein the performing of the RVQoE measurement in the inactive or idle mode comprises:
receiving, from a first base station, a broadcast signal in an inactive or idle mode; and
performing the RVQoE measurement, based on the broadcast signal.

12. The method of claim 9, wherein the configuration information for the RVQoE measurement includes information related to an area for the RVQoE measurement.

13. The method of claim 9, further comprising:
receiving, from a third base station, a broadcast signal in an inactive or idle mode; and
performing the RVQoE measurement, based on the broadcast signal,
wherein the information on the result of the RVQoE measurement includes at least one of a result of RVQoE measurement between the UE and the first base station or a result of RVQoE measurement between the UE and the third base station.

14. The method of claim 9, further comprising:
transmitting, to the second base station, information related to availability of the result of the RVQoE measurement; and
receiving, from the second base station, information for configuring retrieval of RVQoE.

15. The method of claim 9, wherein the configuration information for the RVQoE measurement includes an indicator related to detection of packet loss, and
wherein the information on the result of the RVQoE measurement is transmitted in case that the packet loss is detected based on the indicator.
